# EUROPEAN PATENT APPLICATION

(11) **EP 4 844 362 A1**
(43) Date of publication of application: **25.11.2026**
(21) Application number: 25768026.4
(22) Date of filing: 23.01.2025
(51) Int. Cl.: G01M 13/04, F04D 29/04, G01B 7/00, H02K 11/20

(54) **MOTOR BEARING WEAR MONITORING DEVICE, DISCONNECTION DETECTION PROGRAM, DISCONNECTION ESTIMATION PROGRAM, AND DISCONNECTION DETECTION METHOD**

(30) Priority: 06.03.2024 JP 2024033576
(71) Applicant: Nikkiso Co., Ltd., Tokyo 150-6022 (JP)
(72) Inventor: TANAKA Takuya, Higashimurayama-shi, Tokyo 189-8520 (JP)
(74) Representative: Mathys & Squire
(86) International application number: PCT/JP2025/002094
(87) International publication number: WO 2025/187243

(57) **Abstract**

A motor bearing wear monitoring device (5) monitors a bearing wear state based on a detection signal from each of a plurality of detection coils (C1 to C8) configured to detect changes in magnetic flux corresponding to mechanical positional changes of a rotor (36) relative to a stator (37). The device includes a threshold storage (53b), an acquisition unit (532) acquiring a radial line signal flowing through radial signal lines (L1, L2) and a thrust line signal flowing through thrust signal lines (L3, L4), and a disconnection detection unit (535) detecting, for each of the detection coils, the radial signal line, and the thrust signal line, presence or absence of disconnection. The disconnection detection unit detects presence or absence of disconnection for the corresponding detection coils, radial signal line, and thrust signal line based on voltage values of the radial and thrust line signals and the radial and thrust thresholds.

## Description

### [Technical Field]

The present invention relates to a motor bearing wear monitoring device, a disconnection detection program, a disconnection estimation program, and a disconnection detection method.

### [Background Art]

A canned motor pump has a structure in which a pump and a motor are integrated, thereby preventing leakage of pumped liquid. In general, the rotating structure of a canned motor pump (a rotor, a rotary shaft, bearings, and an impeller) is sealed in a can filled with pumped liquid. Thus, the internal structure of the canned motor pump cannot be visually monitored from outside. Accordingly, in order to efficiently operate a canned motor pump having such a structure, a device for monitoring a wear state of bearings (hereinafter referred to as a "monitoring device") is used (e.g., see PTL 1).

### [Citation List]

### [Patent Literature]

[PTL 1] JP 2013-078170 A1

### [Summary of Invention]

### [Technical Problem]

The monitoring device disclosed in PTL 1 monitors displacement of the rotor and the rotary shaft in radial and thrust directions caused by wear of bearings, by measuring changes in magnetic flux during rotation of the rotor using detection coils. The detection coils are attached to the stator so as to be embedded at both longitudinal ends of the stator. Accordingly, the presence or absence of disconnection of the detection coils cannot be visually checked from outside the canned motor pump and has to be checked electrically. Access to a terminal block is required for such an electrical check. However, in view of operator safety, it is difficult to access the terminal block of the canned motor pump during operation, and exposure of the terminal block is also restricted in an environment requiring explosion-proof protection. Accordingly, an electrical check requires stopping the canned motor pump, but stopping the canned motor pump is not easy because it leads to shutdown of manufacturing facilities or plants.

The present invention is directed to providing a motor bearing wear monitoring device, a disconnection detection program, a disconnection estimation program, and a disconnection detection method for safely checking the presence or absence of disconnection of detection coils without stopping a canned motor pump.

### [Solution to Problem]

A motor bearing wear monitoring device according to one aspect of the present invention is a motor bearing wear monitoring device that monitors a wear state of bearings supporting a rotary shaft of a rotor, based on a detection signal from each of a plurality of detection coils configured to detect changes in magnetic flux corresponding to mechanical positional changes of the rotor relative to a stator of a motor of a canned motor pump, in which the plurality of detection coils includes at least a pair of radial detection coils configured to detect the changes in magnetic flux in a radial direction of the rotary shaft, and at least a pair of thrust detection coils configured to detect the changes in magnetic flux in a thrust direction of the rotary shaft, the pair of radial detection coils and the pair of thrust detection coils are disposed at an end of the stator on one side or the other side in the thrust direction, the pair of radial detection coils is electrically connected to a radial signal line through which a radial combined signal obtained by combining the detection signals from the respective radial detection coils flows, and the pair of thrust detection coils is electrically connected to a thrust signal line through which a thrust combined signal obtained by combining the detection signals from the respective thrust detection coils flows, the motor bearing wear monitoring device including: a threshold storage that stores a radial threshold set to be smaller than a voltage value of the radial combined signal and a thrust threshold set to be smaller than a voltage value of the thrust combined signal; an acquisition unit that acquires a radial line signal flowing through the radial signal line and a thrust line signal flowing through the thrust signal line; and a disconnection detection unit that detects, for each of the detection coils, the radial signal line, and the thrust signal line, presence or absence of disconnection, in which, when none of the detection coils, the radial signal line, and the thrust signal line is disconnected, the radial combined signal flows through the radial signal line as the radial line signal and the thrust combined signal flows through the thrust signal line as the thrust line signal, and, in which the disconnection detection unit detects, based on a voltage value of the radial line signal and the radial threshold, presence or absence of the disconnection of the radial detection coils and the radial signal line, and detects, based on a voltage value of the thrust line signal and the thrust threshold, presence or absence of the disconnection of the thrust detection coils and the thrust signal line.

A motor bearing wear monitoring device according to one aspect of the present invention is a motor bearing wear monitoring device that monitors a wear state of bearings supporting a rotary shaft of a rotor, based on a detection signal from each of a plurality of detection coils configured to detect changes in magnetic flux corresponding to mechanical positional changes of the rotor relative to a stator of a motor of a canned motor pump, in which the plurality of detection coils includes a pair of radial detection coils configured to detect the changes in magnetic flux in a radial direction of the rotary shaft, and a pair of thrust detection coils configured to detect the changes in magnetic flux in a thrust direction of the rotary shaft, the pair of radial detection coils and the pair of thrust detection coils are disposed at an end of the stator on one side or the other side in the thrust direction, the pair of radial detection coils is electrically connected to a radial signal line through which a radial combined signal obtained by combining the detection signals from the respective radial detection coils flows, and the pair of thrust detection coils is electrically connected to a thrust signal line through which a thrust combined signal obtained by combining the detection signals from the respective thrust detection coils flows, the motor bearing wear monitoring device including: a voltage-value storage that updates and stores a radial maximum voltage value that is a maximum value among voltage values of the radial combined signal and a thrust maximum voltage value that is a maximum value among voltage values of the thrust combined signal; an acquisition unit that acquires a radial line signal flowing through the radial signal line, a thrust line signal flowing through the thrust signal line, the radial maximum voltage value, and the thrust maximum voltage value; a machine-learning-model storage that stores a radial machine learning model trained by machine learning to estimate presence or absence of disconnection of the radial detection coils and the radial signal line in response to input of a voltage value of the radial line signal and the radial maximum voltage value, and a thrust machine learning model trained by machine learning to estimate presence or absence of disconnection of the thrust detection coils and the thrust signal line in response to input of a voltage value of the thrust line signal and the thrust maximum voltage value; and a disconnection estimation unit that estimates, for each of the detection coils, the radial signal line, and the thrust signal line, presence or absence of disconnection, in which, when none of the detection coils, the radial signal line, and the thrust signal line is disconnected, the radial combined signal flows through the radial signal line as the radial line signal and the thrust combined signal flows through the thrust signal line as the thrust line signal, and the disconnection estimation unit estimates, for each of the radial detection coils and the radial signal line, presence or absence of disconnection by inputting the voltage value of the radial line signal and the radial maximum voltage value to the radial machine learning model, and estimates, for each of the thrust detection coils and the thrust signal line, presence or absence of disconnection by inputting the voltage value of the thrust line signal and the thrust maximum voltage value to the thrust machine learning model.

A disconnection detection program according to one aspect of the present invention configures a computer to operate as the motor bearing wear monitoring device according to the first aspect described above.

A disconnection estimation program according to one aspect of the present invention configures a computer to operate as the motor bearing wear monitoring device according to the second aspect described above.

A disconnection detection method according to one aspect of the present invention is a disconnection detection method performed by a motor bearing wear monitoring device that monitors a wear state of bearings supporting a rotary shaft of a rotor based on a detection signal from each of a plurality of detection coils configured to detect changes in magnetic flux corresponding to mechanical positional changes of the rotor relative to a stator of a motor of a canned motor pump, in which the plurality of detection coils includes a pair of radial detection coils configured to detect the changes in magnetic flux in a radial direction of the rotary shaft, and a pair of thrust detection coils configured to detect the changes in magnetic flux in a thrust direction of the rotary shaft, the pair of radial detection coils and the pair of thrust detection coils are disposed at an end of the stator on one side or the other side in the thrust direction, the pair of radial detection coils is electrically connected to a radial signal line through which a radial combined signal obtained by combining the detection signals from the respective radial detection coils flows, the pair of thrust detection coils is electrically connected to a thrust signal line through which a thrust combined signal obtained by combining the detection signals from the respective thrust detection coils flows, the motor bearing wear monitoring device includes a threshold storage that stores a radial threshold set to be smaller than a voltage value of the radial combined signal and a thrust threshold set to be smaller than a voltage value of the thrust combined signal, and, when none of the detection coils, the radial signal line, and the thrust signal line is disconnected, the radial combined signal flows through the radial signal line as a radial line signal and the thrust combined signal flows through the thrust signal line as a thrust line signal, the disconnection detection method including: an acquisition step of acquiring, by the motor bearing wear monitoring device, the radial line signal from the radial signal line and acquiring, by the motor bearing wear monitoring device, the thrust line signal from the thrust signal line; and a disconnection detection step of detecting, by the motor bearing wear monitoring device, the disconnection for each of the radial detection coils and the radial signal line based on a voltage value of the radial line signal and the radial threshold, and detecting, by the motor bearing wear monitoring device, the disconnection for each of the thrust detection coils and the thrust signal line based on a voltage value of the thrust line signal and the thrust threshold.

### [Advantageous Effects of Invention]

The present invention enables safe checking of the presence or absence of disconnection of detection coils without stopping a canned motor pump.

### [Brief Description of Drawings]

[Fig. 1] Fig. 1 is a side view of a canned motor pump.
[Fig. 2] Fig. 2 is a schematic sectional view of a motor section illustrating a longitudinal section of the motor section included in the canned motor pump in Fig. 1.
[Fig. 3] Fig. 3 is an enlarged schematic sectional view of part A of the motor section in Fig. 2.
[Fig. 4] Fig. 4 is a functional block diagram illustrating an embodiment of the motor bearing wear monitoring device according to the present invention.
[Fig. 5] Fig. 5 is a schematic perspective view of a stator core illustrating arrangement of detection coils included in the motor bearing wear monitoring device in Fig. 4.
[Fig. 6] Fig. 6 is an enlarged perspective view of part B in Fig. 5.
[Fig. 7] Fig. 7 is a schematic diagram illustrating an example of a detection signal output from one of the detection coils in Fig. 5.
[Fig. 8] Fig. 8 is a schematic diagram illustrating an example of information stored in RAM included in the motor bearing wear monitoring device in Fig. 4.
[Fig. 9] Fig. 9 is a schematic diagram illustrating an example of the appearance of an indicator included in the motor bearing wear monitoring device in Fig. 4.
[Fig. 10] Fig. 10 is a functional block diagram of an offset processing unit included in the motor bearing wear monitoring device in Fig. 4.
[Fig. 11] Fig. 11 is a flowchart illustrating an example of an operation of the motor bearing wear monitoring device in Fig. 4.
[Fig. 12] Fig. 12 is a flowchart illustrating an example of update processing included in the operation of Fig. 11.
[Fig. 13] Fig. 13 is a flowchart illustrating an example of radial-side disconnection detection processing included in the operation of Fig. 11.
[Fig. 14] Fig. 14 is a flowchart illustrating an example of thrust-side disconnection detection processing included in the operation of Fig. 11.
[Fig. 15] Fig. 15 is a flowchart illustrating an example of wear amount detection processing included in the operation of Fig. 11.
[Fig. 16] Fig. 16 is a functional block diagram illustrating another embodiment of the motor bearing wear monitoring device according to the present invention.
[Fig. 17] Fig. 17 is a schematic diagram illustrating an example of information stored in a storage included in the motor bearing wear monitoring device in Fig. 16.
[Fig. 18] Fig. 18 is a flowchart illustrating an example of an operation of the motor bearing wear monitoring device in Fig. 16.
[Fig. 19] Fig. 19 is a flowchart illustrating an example of radial-side disconnection detection processing included in the operation of Fig. 18.
[Fig. 20] Fig. 20 is a flowchart illustrating an example of thrust-side disconnection detection processing included in the operation of Fig. 18.

### [Description of Embodiments]

The present invention is directed to providing a motor bearing wear monitoring device for a canned motor pump with a function of automatically detecting disconnection of detection coils and signal lines thereof, so that the presence or absence of disconnection of the detection coils and the signal lines thereof can be safely checked without stopping the canned motor pump. Details of each term will be described later.

Embodiments of a motor bearing wear monitoring device according to the present invention (hereinafter referred to as the "present device"), a disconnection detection program according to the present invention (hereinafter referred to as the "present detection program"), a disconnection estimation program according to the present invention (hereinafter referred to as the "present estimation program"), and a disconnection detection method according to the present invention (hereinafter referred to as the "present detection method") will be described below. In the following description, the drawings will be referred to as appropriate. In the drawings, the same members and components are indicated with the same reference signs, and repetitive description thereof will be omitted. Further, the dimensional ratios of the components may be exaggerated for convenience of description and are not limited to the ratios illustrated in the drawings.

### Canned Motor Pump

### Configuration of Canned Motor Pump

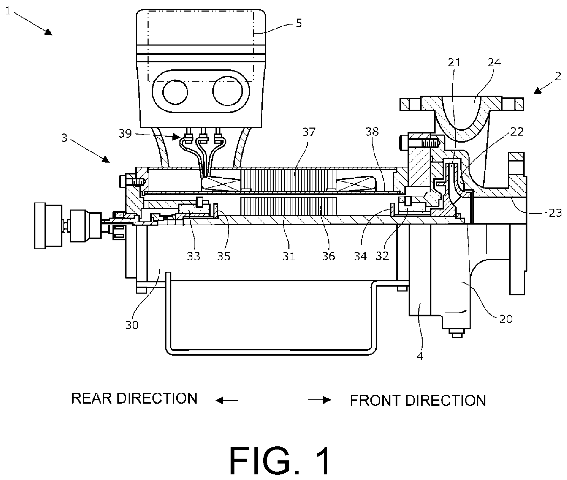

Fig. 1 is a side view of a canned motor pump. The figure illustrates the upper half portion of the canned motor pump 1 in section for convenience of description.

The canned motor pump 1 (hereinafter simply referred to as the "pump 1") is a pump having a structure configured to prevent leakage of pumped liquid, and is used particularly for delivering a high-temperature liquid or a highly dangerous liquid, such as a liquid having explosiveness, flammability, or toxicity. The pump 1 includes a pump section 2, a motor section 3, an adapter 4, and the present device 5.

The pump section 2, the motor section 3, and the adapter 4 of the pump 1 have configurations common to those of a known canned motor pump. Thus, in the following description, the configurations of the pump section 2, the motor section 3, and the adapter 4 will be briefly described, and the detailed description thereof will be omitted.

In the following description, the "front direction" is the direction in which the pump section 2 is located relative to the motor section 3 (forward), and the "rear direction" is the direction in which the motor section 3 is located relative to the pump section 2 (rearward).

The pump section 2 sucks and discharges pumped liquid. The pump section 2 includes a housing 20, an impeller 21, a pump chamber 22, a suction pipe portion 23, and a discharge pipe portion 24. The housing 20 defines the pump chamber 22 that accommodates the impeller 21, the suction pipe portion 23 that is a passage through which the pumped liquid is sucked into the pump chamber 22, and the discharge pipe portion 24 that is a passage through which the pumped liquid is discharged from the pump chamber 22. The pump chamber 22 communicates with the suction pipe portion 23 and the discharge pipe portion 24.

The motor section 3 is driven under a predetermined driving condition (e.g., 200 V, 60 Hz) and rotates the impeller 21. The motor section 3 includes a housing 30, a rotary shaft 31, two bearings 32 and 33, two thrust washers 34 and 35, a rotor 36, a stator 37, a can 38, and a terminal 39. The motor section 3 is an example of the motor in the present invention.

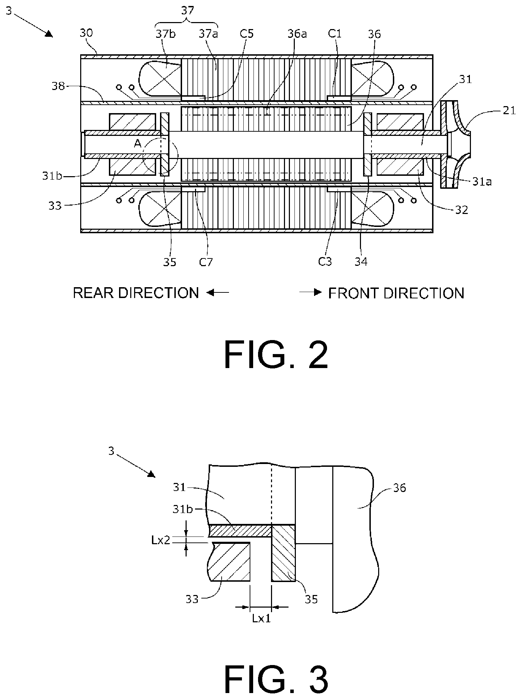

Fig. 2 is a schematic longitudinal sectional view of the motor section 3. Fig. 3 is an enlarged schematic sectional view of part A of the motor section 3 in Fig. 2. In the following description, Fig. 1 will be referred to as necessary.

The housing 30 liquid-tightly accommodates the stator 37 and the can 38.

The rotary shaft 31 rotates by the rotation of the rotor 36 and transmits rotational power to the impeller 21. The rotary shaft 31 has a solid cylindrical shape. The rotary shaft 31 extends through the rotor 36 and is fixed to the rotor 36. A front end portion of the rotary shaft 31 protrudes into the pump chamber 22, and the impeller 21 is attached to the front end portion. The rotary shaft 31 includes hollow cylindrical sleeves 31a and 31b that protect a front portion and a rear portion of the rotary shaft 31.

In the following description, the "thrust direction" is the axial direction of the rotary shaft 31, the "radial direction" is the radial direction of the rotary shaft 31, and the "circumferential direction" is the circumferential direction of the rotary shaft 31.

The bearing 32 is disposed in the front direction relative to the rotor 36 and rotatably supports the rotary shaft 31. The bearing 33 is disposed in the rear direction relative to the rotor 36 and rotatably supports the rotary shaft 31. The bearings 32 and 33 are, for example, plain bearings. The thrust washer 34 is mounted on the rotary shaft 31 between the bearing 32 and the rotor 36 and restricts movement of the rotary shaft 31 in the front direction. The thrust washer 35 is mounted on the rotary shaft 31 between the bearing 33 and the rotor 36 and restricts movement of the rotary shaft 31 in the rear direction.

Gaps each having the length Lx1 are defined between the bearing 32 and the thrust washer 34 and between the bearing 33 and the thrust washer 35. Gaps each having the length Lx2 are defined between the bearing 32 and the sleeve 31a and between the bearing 33 and the sleeve 31b.

The rotor 36 rotates due to a rotating magnetic field generated in the stator 37. The rotor 36 has a hollow cylindrical shape. The rotor 36 includes a plurality of rod-shaped rotor bars 36a (28 in the present embodiment) embedded in an outer peripheral portion of the rotor 36 at equal intervals in the circumferential direction.

The stator 37 generates the rotating magnetic field that rotates the rotor 36. The stator 37 has a substantially hollow cylindrical shape. The stator 37 includes a stator core 37a and a plurality of motor windings 37b.

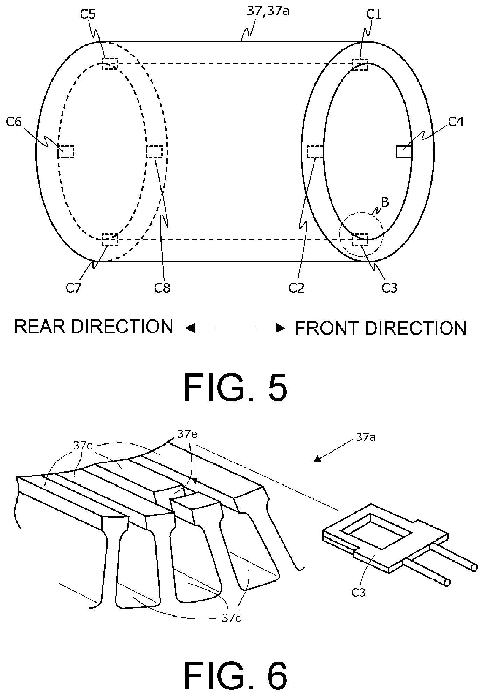

The stator core 37a holds the motor winding 37b. The stator core 37a has a hollow cylindrical shape. The stator core 37a includes a plurality of tooth portions 37c (see Fig. 6; the same applies hereinafter).

The tooth portions 37c define slots 37d through which the motor windings 37b extend (see Fig. 6; the same applies hereinafter). In the circumferential direction, the tooth portions 37c are arranged at equal intervals on an inner peripheral surface of the stator core 37a. The motor windings 37b extend through the slots 37d and are connected, via the terminal 39, to a power supply device (not illustrated) such as an inverter.

The can 38 liquid-tightly accommodates the rotary shaft 31, the bearings 32 and 33, the thrust washers 34 and 35, and the rotor 36. The can 38 has a hollow cylindrical shape. A portion of the pumped liquid introduced from the suction pipe portion 23 is introduced into the can 38, used to cool the bearings 32 and 33 and the motor section 3, and discharged to the discharge pipe portion 24.

The adapter 4 is connected to a rear-side end portion of the pump section 2 and a front-side end portion of the motor section 3, thereby coupling the pump section 2 to the motor section 3.

The present device 5 detects changes in magnetic flux corresponding to mechanical positional changes of the rotor 36 relative to the stator 37, thereby monitoring a wear state of the bearings 32 and 33 supporting the rotating shaft 31. A specific configuration of the present device 5 will be described later.

### Motor Bearing Wear Monitoring Device (1)

### Configuration of Motor Bearing Wear Monitoring Device (1)

Next, the configuration of the present device 5 will be described below. In the following description, Figs. 1 to 3 will be referred to as appropriate.

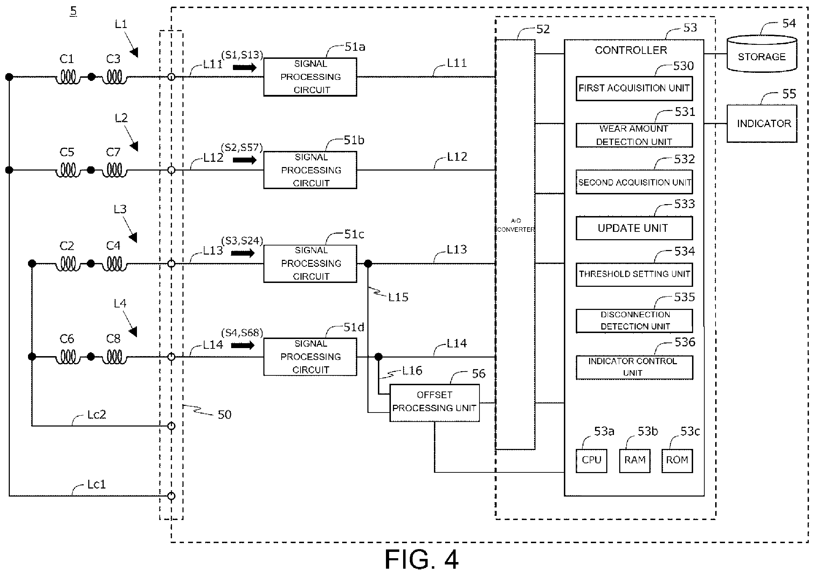

Fig. 4 is a functional block diagram illustrating an embodiment of the present device 5.

The present device 5 includes eight detection coils C1, C2, C3, C4, C5, C6, C7, and C8, a connection portion 50, two common lines Lc1 and Lc2, six signal lines L11, L12, L13, L14, L15, and L16, four signal processing circuits 51a, 51b, 51c, and 51d, an A/D converter 52, a controller 53, a storage 54, an indicator 55, and an offset processing unit 56. The A/D converter 52 and the controller 53 are implemented by, for example, a microcomputer.

Fig. 5 is a schematic perspective view of the stator core 37a, illustrating the arrangement of the detection coils C1 to C8. Fig. 6 is an enlarged perspective view of part B in Fig. 5.

The detection coils C1 to C8 detect changes in magnetic flux corresponding to changes in position (displacement) of the rotor 36 relative to the stator 37, generate detection signals (induced currents) indicating the changes in magnetic flux, and output the detection signals. The rotor 36 is displaced in the radial direction together with the rotary shaft 31 depending on wear amounts of the bearings 32 and 33 in the radial direction, and the rotor 36 is displaced in the thrust direction together with the rotary shaft 31 depending on wear amounts of the bearings 32 and 33 in the thrust direction. That is, the displacement amount of the rotor 36 can be regarded as the wear amounts of the bearings 32 and 33. Thus, the present device 5 is capable of detecting the wear amounts of the bearings 32 and 33 by detecting the displacement amount of the rotor 36 using the detection coils C1 to C8. Each of the detection coils C1 to C8 has a flat bobbin shape. The detection coils C1 to C8 are fitted into notches 37e formed in tooth portions 37c at front-side and rear-side end portions of the stator 37.

In the circumferential direction, the detection coils C1 to C4 are attached at equal intervals (at intervals of 90 degrees) to the front-side end portion of the tooth portions 37c of the stator 37. In the circumferential direction, the detection coil C1 is disposed at a position 180° apart from the detection coil C3 and faces the detection coil C3, and the detection coil C2 is disposed at a position 180° apart from the detection coil C4 and faces the detection coil C4. In contrast, in the circumferential direction, the detection coils C5 to C8 are attached at equal intervals (at intervals of 90 degrees) to the rear-side end portion of the tooth portions 37c of the stator 37. In the circumferential direction, the detection coil C5 is disposed at a position 180° apart from the detection coil C7 and faces the detection coil C7, and the detection coil C6 is disposed at a position 180° apart from the detection coil C8 and faces the detection coil C8. That is, in the radial direction, the detection coils C1, C2, C5, and C6 are disposed so as to face the corresponding detection coils C3, C4, C7, and C8.

In the present invention, the detection coils C1, C2, C5, and C6 need only be disposed facing the corresponding detection coils C3, C4, C7, and C8, and the positions of each corresponding pair in the circumferential direction are not limited to positions exactly 180° apart. That is, for example, due to manufacturing errors or the shape of the stator 37, the positional relationship between the coils of each corresponding pair in the circumferential direction may deviate by several degrees (e.g., about 1° to 5°) from 180°.

In the present invention, the circumferential angle between the detection coil C1 (detection coil C3) and the detection coil C2 (detection coil C4) can be appropriately set within a range of 0° to 180° and is not limited to 90°. That is, for example, in the circumferential direction, the detection coil C2 can be disposed at the same position (0°) as the detection coil C1. In this case, the detection coil C2 is arranged on the rear side or the front side of the detection coil C1 so as to be aligned with the detection coil C1 in the axial direction. The same applies to the arrangement of the detection coil C5 (detection coil C7) and the detection coil C6 (detection coil C8).

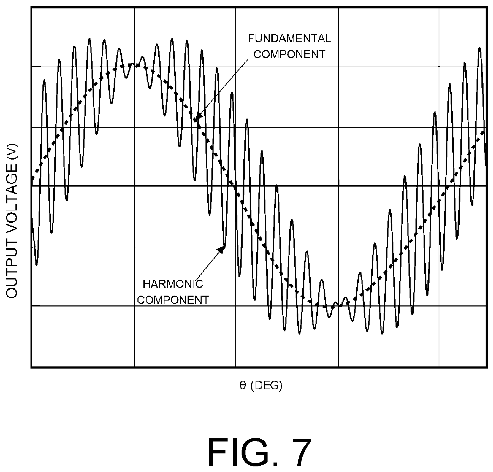

Fig. 7 is a schematic diagram illustrating an example of the detection signal.

The detection signals from the detection coils C1 to C8 each include a waveform corresponding to changes in the main magnetic flux of the motor section 3 (hereinafter referred to as a "fundamental component") and a waveform corresponding to changes in magnetic flux generated by an induced current flowing through the rotor bar 36a of the rotor 36 (hereinafter referred to as a "harmonic component"). The fundamental component is generated by driving voltage of the motor section 3, and the frequency of the fundamental component is the same as the driving frequency of the driving voltage. The harmonic component is generated by the induced currents flowing through the rotor bars 36a, and the frequency of the harmonic component is determined by the rotation of the rotor 36 and the number of rotor bars 36a. That is, for example, under the following conditions (a driving frequency: 60 Hz; number of rotor bars 36a: 28), each of the detection coils C1 to C8 detects changes in magnetic flux caused by the rotor bars 36a 28 times during one rotation of the rotor 36. Thus, the frequency of the harmonic component is "60 Hz × 28 = 1.68 kHz". In this way, the fundamental component is determined based on the driving frequency, and the harmonic component is determined based on the rotation of the rotor 36, the driving frequency, and the number of the rotor bars 36a.

In the following description, Figs. 3 to 5 will be referred to as appropriate. The detection coils C1, C3, C5, and C7 detect the displacement amount of the rotor 36 in the radial direction (i.e., the wear amounts of the bearings 32 and 33 in the radial direction) by detecting changes in magnetic flux corresponding to displacement of the rotor 36 in the radial direction caused by an increase in the gap (L2) between the bearing 32 and the sleeve 31a and between the bearing 33 and the sleeve 31b, and detect. The detection coil C1 is electrically connected to a common line Lc1 and the detection coil C3. The detection coil C3 is electrically connected to the signal line L11 via the connection portion 50. The detection coils C1 and C3 constitute a pair of radial detection coils and are connected so that the detection signals thereof cancel each other out. The detection coil C5 is electrically connected to a common line Lc2 and the detection coil C7. The detection coil C7 is electrically connected to the signal line L12 via the connection portion 50. The detection coils C5 and C7 constitute a pair of radial detection coils and are connected so that the detection signals thereof cancel each other out. The detection coils C1, C3, C5, and C7 are examples of the radial detection coils in the present invention. The detection coils C1 and C3 are examples of a first radial detection coil in the present invention, and the detection coils C5 and C7 are examples of a second radial detection coil in the present invention.

When the front side of the rotor 36 is displaced in the radial direction from an initial position, among the pair of detection coils C1 and C3, the signal level of the harmonic component increases on a side toward which the rotor 36 approaches, for example, at the detection coil C1, and decreases on a side from which the rotor 36 moves away, for example, at the detection coil C3. At this time, since the distance by which the rotor 36 moves relative to each of the detection coils C1 and C3 is the same, the amount of increase in the signal level is the same as the amount of decrease in the signal level. In contrast, the signal level of the fundamental component neither increases nor decreases. Thus, when the detection signals of the detection coils C1 and C3 are combined so as to obtain (generate) a difference, in the combined signal (hereinafter referred to as "combined signal S13"), the difference in the signal level of the harmonic component increases as the displacement amount increases. Based on this difference, the displacement amount of the front side of the rotor 36 in the radial direction can be detected. That is, the difference indicates the wear amount of the bearing 32 in the radial direction, and the value of the difference is represented as a voltage value. Similarly, in a combined signal of the detection signals from the detection coils C5 and C7, hereinafter referred to as the "combined signal S57", a difference between the signal levels of the harmonic components of the detection coils C5 and C7 increases as the displacement amount increases. Based on this difference, the displacement amount of the rear side of the rotor 36 in the radial direction can be detected. That is, the difference indicates the wear amount of the bearing 33 in the radial direction, and the value of the difference is represented as a voltage value. Accordingly, for example, when the rotor 36 is not displaced in the radial direction, in each combined signal (S13, S57), the fundamental component and the harmonic component cancel each other out and the voltage value theoretically becomes "0". In contrast, when the rotor 36 is displaced in the radial direction, in each combined signal (S13, S57), a difference between the signal levels of the harmonic components increases as the displacement amount increases, and the voltage value increases as the difference increases. Further, since the detection coils C1 and C3 are independent of the detection coils C5 and C7, uneven wear of the bearings 32 and 33 (a state in which one of the bearings 32 and 33 is worn more than the other) can be detected by comparing the values of the combined signals S13 and S57. The combined signal S13 is an example of a radial combined signal and a first combined signal in the present invention, and the combined signal S57 is an example of the radial combined signal and a second combined signal in the present invention.

The detection coils C2, C4, C6, and C8 are capable of detecting the displacement amount of the rotor 36 in the thrust direction (i.e., the wear amounts of the bearings 32 and 33 in the thrust direction) by detecting changes in magnetic flux corresponding to displacement of the rotor 36 in the thrust direction caused by an increase in the gap (L1) between the bearing 32 and the thrust washer 34 and between the bearing 33 and the thrust washer 35. The detection coil C2 is electrically connected to a common line Lc2 and the detection coil C4. The detection coil C4 is electrically connected to the signal line L13 via the connection portion 50. The detection coils C2 and C4 constitute a pair of thrust detection coils and are connected in series so that the detection signals of the detection coils C2 and C4 are superimposed. Thus, the detection signals from the detection coils C2 and C4 are combined so as to be superimposed, and a combined signal S24 is generated. The detection coil C6 is electrically connected to the common line Lc2 and the detection coil C8. The detection coil C8 is electrically connected to the signal line L14 via the connection portion 50. The detection coils C6 and C8 constitute another pair of thrust detection coils and are connected in series so that the detection signals of the detection coils C6 and C8 are superimposed. Thus, the detection signals from the detection coils C6 and C8 are combined so as to be superimposed, and a combined signal S68 is generated. The detection coils C2, C4, C6, and C8 are examples of the thrust detection coils in the present invention. The detection coils C2 and C4 are examples of a first thrust detection coil in the present invention, and the detection coils C6 and C8 are examples of a second thrust detection coil in the present invention. The combined signal S24 is an example of a thrust combined signal and a third combined signal in the present invention, and the combined signal S68 is an example of the thrust combined signal and a fourth combined signal in the present invention.

When the rotor 36 is displaced rearward from the initial position, in the thrust direction, overlap between the detection coils C2 and C4 and the front-side end portion (end ring) of the rotor 36 hardly changes, whereas overlap between the detection coils C6 and C8 and the rear-side end portion (end ring) of the rotor 36 decreases. As a result, the signal level of the fundamental component of the combined signal S24 hardly changes, whereas the signal level of the fundamental component of the combined signal S68 decreases. Similarly, when the rotor 36 is displaced frontward from the initial position, the signal level of the fundamental component of the combined signal S68 hardly changes, whereas the signal level of the fundamental component of the combined signal S24 decreases. Thus, based on a difference obtained by combining the combined signal S24 and the combined signal S68, the displacement amount of the rotor 36 in the thrust direction can be detected. That is, the difference indicates the displacement amount of the rotor 36 in the thrust direction, i.e., the wear amounts of the bearings 32 and 33 in the thrust direction, and the value of the difference is represented as a voltage value. Accordingly, for example, when the rotor 36 is not displaced in the thrust direction, the fundamental component and the harmonic component cancel each other out in the difference, and theoretically, the voltage value thereof becomes "0". In contrast, when the rotor 36 is displaced in the thrust direction, the signal level of the fundamental component of the combined signal on one side, e.g., combined signal S24, decreases depending on the displacement amount, whereas the signal level of the fundamental component of the combined signal on the other side, e.g., combined signal S68, hardly changes. Thus, in the difference signal, the difference value (voltage value) of the fundamental component increases depending on the displacement amount. Further, the direction of displacement in the thrust direction can be detected by comparing the magnitudes of the combined signals (S24, S68).

The connection portion 50 is an interface to which the detection coils C1 to C8 are connected. The common lines Lc1 and Lc2, the detection coils C3, C7, C4, and C8, and the signal lines L11 to L14 are connected to the connection portion 50. The common lines Lc1 and Lo2 are connected to ground via the connection portion 50.

The signal processing circuits 51a to 51d are each connected to the corresponding pair of detection coils (C1 to C8), and each circuit performs predetermined signal processing (rectification and AC-to-DC conversion) on the corresponding combined signal (S13, S57, S24, S68) to convert the combined signal (S13, S57, S24, S68) from alternating current to direct current. The signal processing circuits 51a to 51d each include, for example, a filter circuit, a rectifier circuit, and an integrating circuit. The signal processing circuit 51a is connected to the signal line L11 and converts the combined signal S13 from alternating current to direct current. The combined signal S13 converted into direct current is input to the A/D converter 52 via the signal line L11. The signal processing circuit 51b is connected to the signal line L12 and converts the combined signal S57 from alternating current to direct current. The combined signal S57 converted into direct current is input to the A/D converter 52 via the signal line L12. The signal processing circuit 51c is connected to the signal line L13 and converts the combined signal S24 from alternating current to direct current. The combined signal S24 converted to direct current is input to the A/D converter 52 via the signal line L13 and is also input to the offset processing unit 56 via the signal line L15. The signal processing circuit 51d is connected to the signal line L14 and converts the combined signal S68 from alternating current to direct current. The combined signal S68 converted to direct current is input to the A/D converter 52 via the signal line L14 and is also input to the offset processing unit 56 via the signal line L16.

The common line Lc1, the connection portion 50, the signal line L11, and the signal processing circuit 51a are electrically connected to the detection coils C1 and C3 and form a first line L1 through which the combined signal S13 flows. The common line Lc1, the connection portion 50, the signal line L12, and the signal processing circuit 51b are electrically connected to the detection coils C5 and C7 and form a second line L2 through which the combined signal S57 flows. The common line Lc2, the connection portion 50, the signal line L13, and the signal processing circuit 51c are electrically connected to the detection coils C2 and C4 and form a third line L3 through which the combined signal S24 flows. The common line Lc2, the connection portion 50, the signal line L14, and the signal processing circuit 51d are electrically connected to the detection coils C6 and C8 and form a fourth line L4 through which the combined signal S68 flows. The first line L1 and the second line L2 are examples of radial signal lines in the present invention, and the third line L3 and the fourth line L4 are examples of thrust signal lines in the present invention. That is, the radial signal lines include the first line L1 and the second line L2, and the thrust signal lines include the third line L3 and the fourth line L4.

The A/D converter 52 converts, into digital signals, analog signals input from the signal processing circuits 51a to 51d, an arithmetic circuit 56c described later, and a difference absolute value conversion circuit 56d described later, and outputs the digital signals to the control unit 53.

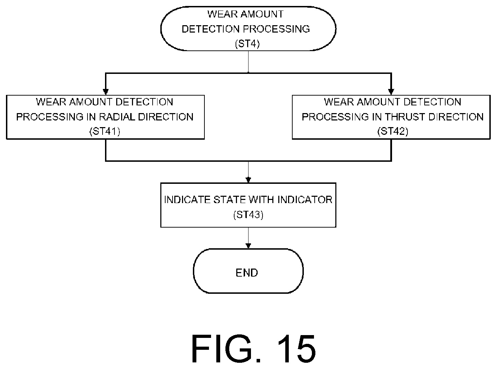

The controller 53 controls the overall operation of the present device 5. The controller 53 includes, for example, a processor such as a central processing unit (CPU) 53a, volatile memory such as random access memory (RAM) 53b that functions as a work area for the CPU 53a, and non-volatile memory such as read only memory (ROM) 53c that stores various kinds of information such as the present detection program and other control programs (e.g., wear amount detection program). The controller 53 includes a first acquisition unit 530, a wear amount detection unit 531, a second acquisition unit 532, an update unit 533, a threshold setting unit 534, a disconnection detection unit 535, and an indicator control unit 536. The RAM 53b is an example of the threshold storage and the voltage value storage in the present invention. The wear amount detection program is a program necessary for performing wear amount detection processing (ST4: see Fig. 15) described later.

In the controller 53, the present detection program operates, and the present detection program cooperates with hardware resources of the present device 5 and implements the present detection method described later. The present detection program is executed by the processor (CPU 53a) included in the controller 53, so that the processor functions as the second acquisition unit 532, the update unit 533, the threshold setting unit 534, the disconnection detection unit 535, and the indicator control unit 536, and executes the present detection method. The present detection program and the wear amount detection program are executed by a computer, so that the computer functions as the present device 5.

Note that, in the present invention, the present detection program may be stored in the storage 54. The present detection program may be stored in a non-transitory storage medium, e.g., a compact disc (CD), a digital versatile disc (DVD), a universal serial bus (USB) memory, etc., in an installable file format or an executable file format and provided to the present device 5 via a dedicated reading medium.

The first acquisition unit 530 acquires the combined signal S13, the combined signal S57, and a signal indicating a difference between the combined signal S24 and the combined signal S68 (i.e., a difference signal (Sd) described later). A specific operation of the first acquisition unit 530 will be described later.

The wear amount detection unit 531 detects the wear amounts of the bearings 32 and 33 in the radial direction by detecting the displacement amount of the rotor 36 in the radial direction at the front side and the rear side based on voltage values of the combined signals (S13, S57) acquired by the first acquisition unit 530. The wear amount detection unit 531 also detects the wear amounts of the bearings 32 and 33 by detecting the displacement amount of the rotor 36 in the thrust direction based on the voltage value of the difference signal (Sd). A specific operation of the wear amount detection unit 531 will be described later.

The second acquisition unit 532 acquires first to fourth maximum voltage values, a first signal S1, a second signal S2, a third signal S3, and a fourth signal S4, which will be described later. The second acquisition unit 532 is an example of the acquisition unit in the present invention. A specific operation of the second acquisition unit 532 will be described later.

Note that, in the present invention, the second acquisition unit 532 may function as the first acquisition unit 530, and the first acquisition unit 530 may function as the second acquisition unit 532.

The "first signal S1" is a signal that flows through the first line L1. When the detection coil C1, the detection coil C3, and the first line L1 are not disconnected, the first signal S1 may include not only the combined signal S13 but also noise components. In other words, when the detection coil C1, the detection coil C3, and the first line L1 are not disconnected, the combined signal S13 flows through the first line L1 as the first signal S1. In contrast, when the detection coil C1, the detection coil C3, or the first line L1 is disconnected, the first signal S1 does not include the combined signal S13 and may primarily include noise components. In other words, when the detection coil C1, the detection coil C3, and the first line L1 are disconnected, the noise components may flow through the first line L1 as the first signal S1.

The "noise components" are signal components (waveforms) indicating noise included in the first signal S1 to the fourth signal S4, which flow through the detection coils C1 to C8 and the first line L1 to the fourth line L4, the noise being derived from electromagnetic noise from a noise source (e.g., the motor section 3 and a power supply that supplies power to the motor section 3). The noise components have a plurality of causes, and the signal level, that is, the voltage value, of each noise component differs for each cause and for each noise intrusion path.

The "second signal S2" is a signal that flows through the second line L2. Similarly to the first signal S1, when the detection coil C5, the detection coil C7, and the second line L2 are not disconnected, the combined signal S57 flows through the second line L2 as the second signal S2. In contrast, when the detection coil C5, the detection coil C7, or the second line L2 is disconnected, noise components may flow through the second line L2 as the second signal S2.

The "third signal S3" is a signal that flows through the third line L3. Similarly to the first signal S1, when the detection coil C2, the detection coil C4, and the third line L3 are not disconnected, the combined signal S24 flows through the third line L3 as the third signal S3. In contrast, when the detection coil C2, the detection coil C4, or the third line L3 is disconnected, noise components may flow through the third line L3 as the third signal S3.

The "fourth signal S4" is a signal that flows through the fourth line L4. Similarly to the first signal S1, when the detection coil C6, the detection coil C8, and the fourth line L4 are not disconnected, the combined signal S68 flows through the fourth line L4 as the fourth signal S4. In contrast, when the detection coil C6, the detection coil C8, or the fourth line L4 is disconnected, noise components may flow through the fourth line L4 as the fourth signal S4.

The first signal S1 and the second signal S2 are examples of radial line signals in the present invention, and the third signal S3 and the fourth signal S4 are examples of thrust line signals in the present invention. That is, the radial line signals include the first signal S1 and the second signal S2, and the thrust line signals include the third signal S3 and the fourth signal S4.

The update unit 533 updates the first maximum voltage value, the second maximum voltage value, the third maximum voltage value, and the fourth maximum voltage value stored in the RAM 53b. A specific operation of the update unit 533 will be described later.

The "first maximum voltage value" is the maximum voltage value among the voltage values of the combined signal S13 acquired from the first line L1.

The "second maximum voltage value" is the maximum voltage value among the voltage values of the combined signal S57 acquired from the second line L2.

The "third maximum voltage value" is the maximum voltage value among the voltage values of the combined signal S24 acquired from the third line L3.

The "fourth maximum voltage value" is the maximum voltage value among the voltage values of the combined signal S68 acquired from the fourth line L4.

The first maximum voltage value and the second maximum voltage value are examples of radial maximum voltage values in the present invention, and the third maximum voltage value and the fourth maximum voltage value are examples of thrust maximum voltage values in the present invention. That is, the radial maximum voltage values include the first maximum voltage value and the second maximum voltage value, and the thrust maximum voltage values include the third maximum voltage value and the fourth maximum voltage value.

The threshold setting unit 534 sets the first threshold, the second threshold, the third threshold, and the fourth threshold based on the first maximum voltage value to the fourth maximum voltage value. The set first to fourth thresholds are stored in the RAM 53b. Details of the first to fourth thresholds and a specific operation of the threshold setting unit 534 will be described later.

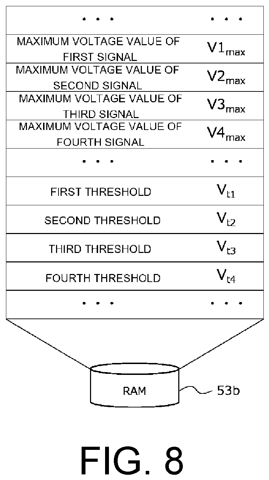

Fig. 8 is a schematic diagram illustrating an example of information stored in the RAM 53b. The figure illustrates that the first maximum voltage value is "V1ₘₐₓ", the second maximum voltage value is "V2ₘₐₓ", the third maximum voltage value is "V3ₘₐₓ", the fourth maximum voltage value is "V4ₘₐₓ", the first threshold is "Vₜ₁", the second threshold is "Vₜ₂", the third threshold is "Vₜ₃", and the fourth threshold is "Vₜ₄". The figure also illustrates that the first maximum voltage value to the fourth maximum voltage value and the first threshold to the fourth threshold are stored in the RAM 53b.

In the following description, Fig. 4 will be mainly referred to. The disconnection detection unit 535 detects the presence or absence of disconnection of the detection coils C1 to C8 and the first line L1 to the fourth line L4 based on the first signal S1 to the fourth signal S4 and the first threshold to the fourth threshold. A specific operation of the disconnection detection unit 535 will be described later.

The indicator control unit 536 controls the indication of the indicator 55 based on the wear amount detected by the wear amount detection unit 531 and the presence or absence of disconnection detected by the disconnection detection unit 535. A specific operation of the indicator control unit 536 will be described later.

The storage 54 stores information necessary for operation of the present device 5 (e.g., offset information, first correspondence relationship information, second correspondence relationship information). The storage 54 is, for example, non-volatile memory such as electrically erasable programmable read-only memory (EEPROM) or flash memory.

The "offset information" is information (e.g., a voltage value) indicating an offset voltage to be added to or subtracted from the combined signal S24 in offset processing described later. The offset information is, for example, measured or set in advance prior to shipment of the present pump 1 under predetermined reference driving conditions (e.g., a driving frequency of 60 Hz, a driving voltage of 200 V), and is stored in the storage 54.

The "offset processing" means processing for adding the offset voltage to or subtracting the offset voltage from the combined signal S24 so that a difference value between the combined signal S24 and the combined signal S68 correctly indicates the displacement amount of the rotor 36 in the thrust direction (the wear amounts of the bearings 32 and 33 in the thrust direction) under the reference driving conditions. As a result of the offset processing, the magnetic center position of the rotor 36 relative to the stator 37 in the thrust direction is virtually aligned with the mechanical center position of the rotor 36 relative to the stator 37 in the thrust direction (i.e., the two center positions coincide with each other).

Whether the offset voltage is a signal to be added to the combined signal S24, i.e., an addition signal, or a signal to be subtracted from the combined signal S24, i.e., a subtraction signal, is determined based on a magnitude relationship between the combined signal S24 and the combined signal S68. That is, for example, when the combined signal S24 is greater than the combined signal S68, the offset voltage is a subtraction signal, and in the opposite case, the offset information is an addition signal. In the present embodiment, the offset voltage is an addition signal. This magnitude relationship is determined based on signals on which the offset processing has not been performed, that is, the combined signals S24 and S68 input to the A/D converter 52 from the third line L3 and the fourth line L4.

The "first correspondence relationship information" is information indicating the correspondence relationship, under the predetermined driving conditions, between the position (displacement amount) of the rotor 36 relative to the stator 37 in the thrust direction and the difference value between the combined signal S24 and the combined signal S68. That is, the first correspondence relationship information indicates a correspondence relationship between the wear amounts of the bearings 32 and 33 in the thrust direction and the voltage value under the predetermined driving conditions.

The "second correspondence relationship information" is information indicating a correspondence relationship between the position (displacement amount) of the rotor 36 relative to the stator 37 in the radial direction and the voltage values of the combined signals S13 and S57 under the predetermined driving conditions. That is, the second correspondence relationship information indicates a correspondence relationship between the wear amounts of the bearings 32 and 33 in the radial direction and the voltage values of the combined signals under the predetermined driving conditions.

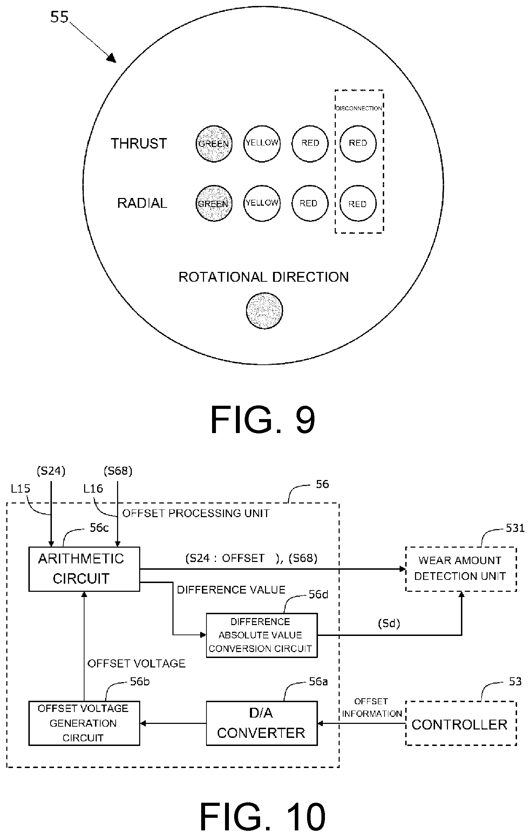

Fig. 9 is a schematic diagram illustrating an example of the appearance of the indicator 55.

The indicator 55 indicates the wear states of the bearings 32 and 33, the rotational direction of the rotary shaft 31, and the presence or absence of disconnection of the detection coils C1 to C8 and the first to the fourth lines L1 to L4. The indicator 55 includes, for example, a plurality of light-emitting diodes (LEDs) configured to indicate the wear states in the radial and thrust directions, the rotational direction, and the presence or absence of disconnection. The indicator 55 indicates the wear states in the radial and thrust directions in three levels, namely "green", "yellow", and "red", and indicates the rotational direction by turning on and turning off an LED, where the turned-on state indicates forward rotation and the turned-off state indicates reverse rotation. The indicator 55 also indicates the presence or absence of disconnection by turning on and turning off an LED, where the turned-on state indicates the presence of disconnection and the turned-off state indicates the absence of disconnection.

Fig. 10 is a functional block diagram of the offset processing unit 56.

The offset processing unit 56 performs the offset processing based on the offset information. The offset processing unit 56 includes a D/A converter 56a, an offset voltage generation circuit 56b, an arithmetic circuit 56c, and a difference absolute value conversion circuit 56d.

The D/A converter 56a converts the offset information from a digital signal into an analog signal.

The offset voltage generation circuit 56b generates an offset voltage to be added to or subtracted from the combined signal S24 of the detection coils C2 and C4 based on the offset information converted into the analog signal.

The arithmetic circuit 56c performs the offset processing on the combined signal S24 by adding the offset voltage to or subtracting the offset voltage from the combined signal S24, and calculates a difference value between the combined signal S24 after the offset processing and the combined signal S68. The signal line L13 is connected to the arithmetic circuit 56c via the signal line L15 between the signal processing circuit 51c and the A/D converter 52. The signal line L14 is connected to the arithmetic circuit 56c via the signal line L16 between the signal processing circuit 51d and the A/D converter 52.

The difference absolute value conversion circuit 56d converts the difference value calculated by the arithmetic circuit 56c into an absolute value. A signal indicating the absolute value, hereinafter referred to as the "difference signal (Sd)", is converted into a digital signal by the A/D converter 52 and input to the controller 53.

### Setting of First to Fourth Thresholds

Next, the setting of the first to fourth thresholds will be described below.

The "first threshold" is a threshold value used to determine the presence or absence of disconnection of the detection coil C1, the detection coil C3, or the first line L1. The first threshold is set based on the first maximum voltage value and the signal level of noise components flowing through the detection coils C1 and C3 and the first line L1. The first threshold is smaller than the third threshold and the fourth threshold.

The "second threshold" is a threshold value used to determine the presence or absence of disconnection of the detection coil C5, the detection coil C7, or the second line L2. The second threshold is set based on the second maximum voltage value and the signal level of noise components flowing through the detection coils C5 and C7 and the second line L2. The second threshold is smaller than the third threshold and the fourth threshold.

The "third threshold" is a threshold value used to determine the presence or absence of disconnection of the detection coil C2, the detection coil C4, or the third line L3. The third threshold is set based on the third maximum voltage value and the signal level of noise components flowing through the detection coils C2 and C4 and the third line L3.

The "fourth threshold" is a threshold value used to determine the presence or absence of disconnection of the detection coil C6, the detection coil C8, or the fourth line L4. The fourth threshold is set based on the fourth maximum voltage value and the signal level of noise components flowing through the detection coils C6 and C8 and the fourth line L4.

The first threshold and the second threshold are examples of the radial thresholds in the present invention, and the third threshold and the fourth threshold are examples of the thrust thresholds in the present invention. That is, the radial thresholds include the first threshold and the second threshold, and the thrust thresholds include the third threshold and the fourth threshold.

In general, when a sensor fails, a receiving device that receives a signal from the sensor can detect the sensor failure by detecting an abnormal value in the signal. However, as described later, the present device 5 detects the wear amount in the thrust direction based on the difference signal (Sd) indicating the difference value (absolute value) between the combined signal S24 and the combined signal S68. In this detection method, even if the line for one of the signals is disconnected, the other signal remains as a normal value. The wear amount in the thrust direction is detected based on the voltage value of the fundamental component of the difference signal (Sd). Thus, if one of the signals remains, an apparent wear amount in the thrust direction, which differs from the true wear amount, may be detected based on the voltage value of the fundamental component of the remaining signal. As a result, in a disconnection detection method using only the voltage value of the difference signal Sd, no abnormal value may be detected, and disconnection of the detection coils C2, C4, C6, and C8, the third line L3, and the fourth line L4 may not be detected. Accordingly, to detect disconnection of the detection coils C2, C4, C6, and C8, the third line L3, and the fourth line L4, evaluating the voltage values of the combined signals S24 and S68 is more suitable than evaluating the voltage value of the difference signal Sd.

In contrast, as described later, the present device 5 detects the wear amount in the radial direction based on the voltage values of the combined signals S13 and S57. In this detection method, for example, when the first line L1 is disconnected, the combined signal S13 is not included in the first signal S1, and theoretically, the signal level of the first signal S1 becomes "0". In this case, the present device 5 can recognize that value as an abnormal value and detect disconnection of the detection coil C1, the detection coil C3, or the first line L1. When an abnormal value is detected using a threshold, the threshold needs to be set to a value smaller than the voltage value of at least the combined signal S13. Herein, the wear amount in the radial direction is detected based on the voltage values of the harmonic components of the combined signals S13 and S57. The signal levels (voltage values) of the harmonic components are low even in a normal state (e.g., about several tens of mV to about 300 mV), and may become as low as the signal levels (voltage values) of noise components. Thus, even if disconnection is present in the detection coil C1, the detection coil C3, or the first line L1, the signal level of the first signal S1 containing noise components does not become 0, and the noise components may be erroneously recognized as the combined signal S13. As a result, in the disconnection detection method using only the voltage values of the combined signals S13 and S57, an abnormal value may be detected as a normal value. Accordingly, with this detection method, detecting disconnection of the detection coils C1, C3, C5, and C7, the first line L1, and the second line L2 is difficult. Thus, detecting disconnection of the detection coils C1, C3, C5, and C7, the first line L1, and the second line L2 involves a technical problem specific to the present device 5. In view of the above, in order to detect disconnection of the detection coils C1, C3, C5, and C7, the first line L1, and the second line L2, threshold processing that takes noise components into account is necessary.

In general, the rotational speed (number of rotations) of a motor is changed by varying a driving frequency through inverter control. In such control, since decreasing only the driving frequency without decreasing the drive voltage may cause burnout of the motor, the driving frequency and the drive voltage are generally changed simultaneously. An increase or decrease in the driving frequency and an increase or decrease in the drive voltage have a proportional relationship. As described above, since the fundamental component of the detection signal is generated by the drive voltage, the signal level (voltage value) of the fundamental component increases and decreases in proportion to increases and decreases in the driving frequency and the drive voltage. When the rotational speed of the motor increases or decreases, the frequency and the signal level of the harmonic component also increase or decrease. Further, as the bearings 32 and 33 wear, the voltage values of the combined signals S13 and S57 increase. Further, contact resistance in the detection coils C1 to C8 and the first to fourth lines L1 to L4 increases over time, and the voltage values of the combined signals S13, S57, S24, and S68 increase in accordance with the increase in the contact resistance. Accordingly, in the present device 5, a fixed value is not suitable as a threshold for detecting disconnection.

In the present device 5, the first to fourth thresholds are set by multiplying the first to fourth maximum voltage values by a predetermined coefficient so that the first to fourth thresholds change in accordance with the latest trend in the voltage values. That is, the "coefficient" is a coefficient (%) by which the first to fourth maximum voltage values are multiplied to set the first to fourth thresholds. Specifically, the first threshold "Vₜ₁" is a value obtained by multiplying the first maximum voltage value "V1ₘₐₓ" by the coefficient "A1", the second threshold "Vₜ₂" is a value obtained by multiplying the second maximum voltage value "V2ₘₐₓ" by the coefficient "A2", the third threshold "Vₜ₃" is a value obtained by multiplying the third maximum voltage value "V3ₘₐₓ" by the coefficient "A3", and the fourth threshold "Vₜ₄" is a value obtained by multiplying the fourth maximum voltage value "V4ₘₐₓ" by the threshold "A4". That is, the first to fourth thresholds are variable values that increase based on the voltage values of the combined signals S13, S57, S24, and S68 (the first to fourth maximum voltage values). Each coefficient is, for example, preset by an operator or the like at the time of shipment of the pump 1 based on an assumed signal level of noise components, incorporated into the present detection program, and stored in the ROM 53c.

Each coefficient is set based on the signal level of noise components included in the corresponding one of the first to fourth signals S1 to S4. Specifically, the coefficients are set such that the first to fourth thresholds are smaller than the voltage values of the corresponding combined signals S13, S57, S24, and S68 and greater than the approximate signal level of the noise components.

For example, in the case of setting the first threshold, as described above, the voltage value of the combined signal S13 may be small and may be at approximately the same level as the voltage value of the noise components. Thus, in a case where the first threshold is set to a large value, even a normal value may be determined as an abnormal value indicating disconnection. Herein, the voltage values of the noise components are unstable and fluctuate greatly. In addition, the noise components may be of various types. Thus, even when the first threshold is set to a small value, the voltage values of the noise components exceed the first threshold only infrequently, and even if the voltage values of the noise components exceed the first threshold, the voltage values fall below the first threshold at some point. Further, the fluctuation range of the voltage value of the combined signal S13 is relatively narrow, for example, about 0 V to 300 mV. Thus, false detection is less likely to occur when the first threshold is set at a value sufficiently different from the normal value. Accordingly, the coefficient used to set the first threshold is set to a relatively small value (e.g., 30%). The same applies to the coefficient used for setting the second threshold.

In contrast, for example, in the case of setting the third threshold, the voltage value of the combined signal S24 is large (e.g., about 1 V to 1.5 V) and is sufficiently greater than the voltage values of the noise components. Therefore, the third threshold can be set to be greater than the voltage values of the noise components. Herein, as described above, when the wear amounts of the bearings 32 and 33 in the thrust direction increase, one of the voltage values of the combined signals S24 and S68 decreases. Thus, the coefficient used for setting the third threshold is set to a value (e.g., 50%) such that, even when the bearings 32 and 33 are worn in the thrust direction, the normal value does not fall below the third threshold, and the third threshold is greater than the voltage values of the noise components. The same applies to the coefficient used for setting the fourth threshold.

In this manner, each coefficient is set based on the signal levels, that is, the voltage values, of the noise components. In other words, the first to fourth thresholds are set based on the signal levels (voltage values) of the noise components.

In the present invention, each coefficient is preferably greater than "0%" and less than or equal to "50%"; however, the present invention is not limited to this embodiment.

### Operation of Canned Motor Pump (Motor Bearing Wear Monitoring Device (1))

Next, the operation of the present pump 1 will be described below with particular focus on the operation of the present device 5. In the following description, Figs. 1 to 10 will be referred to as appropriate.

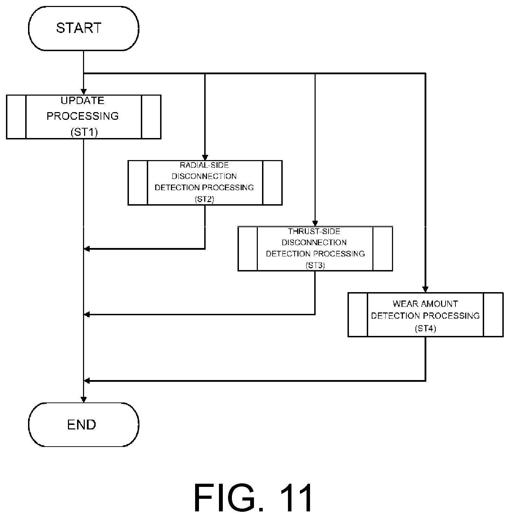

Fig. 11 is a flowchart illustrating an example of the operation of the present device 5.

During operation of the pump 1, drive power is supplied to the motor section 3, and the rotor 36, the rotary shaft 31, and the impeller 21 rotate at a predetermined rotational speed. During this operation, the present device 5 continuously and repeatedly performs update processing (ST1), radial-side disconnection detection processing (ST2), thrust-side disconnection detection processing (ST3), and wear amount detection processing (ST4). The radial-side disconnection detection processing (ST2) and the thrust-side disconnection detection processing (ST3) are examples of the present detection method.

### Update Processing

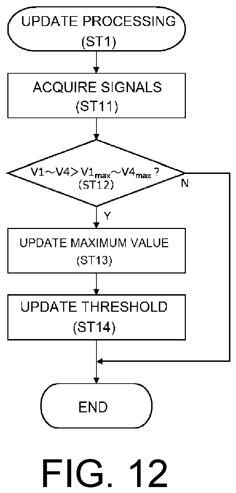

Fig. 12 is a flowchart illustrating an example of the update processing (ST1).

The "update processing (ST1)" is processing in which, during operation of the pump 1, the voltage values of the respective combined signals (S13, S57, S24, S68) are periodically acquired, and the first to fourth maximum voltage values stored in the RAM 53b are updated and stored. When the present device 5 is activated, the update processing (ST1) is performed first. The detection coils C1 to C8 continuously output detection signals during rotation of the rotor 36.

First, the second acquisition unit 532 acquires, as the first signal S1, the combined signal S13 input to the A/D converter 52 from the first line L1; acquires, as the second signal S2, the combined signal S57 input to the A/D converter 52 from the second line L2; acquires, as the third signal S3, the combined signal S24 input to the A/D converter 52 from the third line L3; and acquires, as the fourth signal S4, the combined signal S68 input to the A/D converter 52 from the fourth line L4, thereby acquiring the voltage values "V1" to "V4" of the respective combined signals S13, S57, S24, and S68 (ST11: update acquisition step). Acquisition of each of the combined signals S13, S57, S24, and S68 is performed at predetermined time intervals, for example, every 10 ms.

Then, the update unit 533 compares the acquired voltage values "V1" to "V4" with the first to fourth maximum voltage values "V1ₘₐₓ" to "V4ₘₐₓ" stored in the RAM 53b (ST12: update comparison step). Specifically, the update unit 533 compares the voltage value "V1" of the combined signal S13 with the first maximum voltage value "V1ₘₐₓ", compares the voltage value "V2" of the combined signal S57 with the second maximum voltage value "V2ₘₐₓ", compares the voltage value "V3" of the combined signal S24 with the third maximum voltage value "V3ₘₐₓ", and compares the voltage value "V4" of the combined signal S68 with the fourth maximum voltage value "V4ₘₐₓ".

When one or more voltage values among the voltage values "V1" to "V4" of the combined signals S13, S57, S24, and S68 are greater than the corresponding maximum voltage values among the first to fourth maximum voltage values "V1ₘₐₓ" to "V4ₘₐₓ" (Y in ST12), the update unit 533 updates, among the first to fourth maximum voltage values "V1ₘₐₓ" to "V4ₘₐₓ" stored in the RAM 53b, only the relevant maximum voltage values to the corresponding voltage values among the voltage values "V1" to "V4" (ST13: voltage value update step). That is, the RAM 53b updates and stores the first to fourth maximum voltage values "V1ₘₐₓ" to "V4ₘₐₓ" based on the determination result of the update unit 533.

Then, based on the updated maximum voltage values among the first to fourth maximum voltage values "V1ₘₐₓ" to "V4ₘₐₓ", the threshold setting unit 534 sets the thresholds, among the first to fourth thresholds "Vₜ₁" to "Vₜ₄", that correspond to the updated maximum voltage values (ST14: threshold update step). Processing (ST14) is performed only for the thresholds, among the first to fourth thresholds "Vₜ₁" to "Vₜ₄", that correspond to the updated maximum voltage values among the first to fourth maximum voltage values "V1ₘₐₓ" to "V4ₘₐₓ". After the corresponding thresholds, among the first to fourth thresholds "Vt1" to "Vt4", are set, the control unit 53 ends the update processing (ST1).

In contrast, when all of the voltage values "V1" to "V4" of the combined signals S13, S57, S24, and S68 are equal to or less than the corresponding first to fourth maximum voltage values "V1ₘₐₓ" to "V4ₘₐₓ" (N in ST12), the update unit 533 does not update the first to fourth maximum voltage values "V1ₘₐₓ" to "V4ₘₐₓ", and the controller 53 ends the update processing (ST1).

In the present invention, the processing (ST14) may be performed for all of the first to fourth thresholds.

In the present invention, when the present device 5 is activated, it is preferable that all of the first to fourth maximum voltage values be updated and all of the first to fourth thresholds be set.

### Radial-side Disconnection Detection Processing

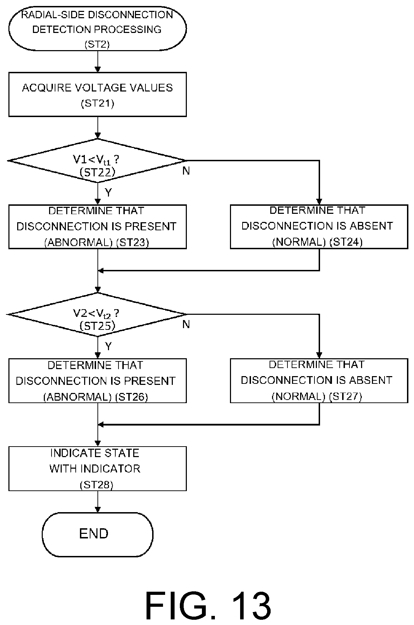

Fig. 13 is a flowchart illustrating an example of radial-side disconnection detection processing (ST2).

The "radial-side disconnection detection processing (ST2)" is processing for detecting the presence or absence of disconnection of the lines for the signals (combined signals S13 and S57) used to detect the wear amounts of the bearings 32 and 33 in the radial direction. That is, the radial-side disconnection detection processing (ST2) is processing for automatically detecting the presence or absence of disconnection of the detection coils C1, C3, C5, and C7 and the first to second lines L1 to L2.

First, the second acquisition unit 532 acquires the voltage value "V1" of the first signal S1 input to the A/D converter 52 from the first line L1, and acquires the voltage value "V2" of the second signal S2 input to the A/D converter 52 from the second line L2 (ST21: first acquisition step). The voltage values "V1" and "V2" are acquired at predetermined time intervals (e.g., every 10 ms). Herein, when the detection coils C1, C3, C5, and C7 and the first to second lines L1 to L2 are not disconnected, the second acquisition unit 532 acquires the combined signal S13 as the first signal S1 and acquires the combined signal S57 as the second signal S2.

Note that, in the present invention, the processing (ST21) may be substituted by the processing (ST11) in the update processing (ST1). That is, the second acquisition unit 532 may acquire the voltage values "V1" and "V2" acquired in the processing (ST11).

Then, the disconnection detection unit 535 compares the voltage value "V1" of the acquired combined signal S13 with the first threshold "Vₜ₁" (ST22: first comparison step).

When the voltage value "V1" is less than the first threshold "Vₜ₁" ("Y" in ST22), the disconnection detection unit 535 determines that disconnection is present in the detection coil C1, the detection coil C3, and the first line L1, i.e., that the state is abnormal (ST23). That is, the disconnection detection unit 535 detects disconnection of the detection coils C1 and C3 and the first line L1. In this case, the first signal S1 does not include the combined signal S13 and may include noise components. In other words, the noise components may flow through the first line L1 as the first signal S1.

In contrast, when the voltage value "V1" is equal to or greater than the first threshold value "Vₜ₁" ("N" in ST22), the disconnection detection unit 535 determines that no disconnection is present in the detection coils C1 and C3 and the first line L1, i.e., that the state is normal (ST24). In this case, the combined signal S13 flows through the first line L1 as the first signal S1.

Then, the disconnection detection unit 535 compares the voltage value "V2" of the acquired combined signal S57 with the second threshold "Vₜ₂" (ST25: second comparison step).

When the voltage value "V2" is less than the second threshold "Vₜ₂" ("Y" in ST25), the disconnection detection unit 535 determines that disconnection is present in the detection coil C5, the detection coil C7, and the second line L2, i.e., that the state is abnormal (ST26). That is, the disconnection detection unit 535 detects disconnection of the detection coils C5 and C7 and the second line L2. In this case, the second signal S2 does not include the combined signal S57 and may include noise components. In other words, the noise components may flow through the second line L2 as the second signal S2.

In contrast, when the voltage value "V2" is equal to or greater than the second threshold "Vt2" ("N" in ST25), the disconnection detection unit 535 determines that no disconnection is present in the detection coils C5 and C7 and the second line L2, i.e., that the state is normal (ST27). In this case, the combined signal S57 flows through the second line L2 as the second signal S2.

Then, the indicator control unit 536 changes the indication mode of the indicator 55 based on the determination result of the disconnection detection unit 535 (ST28: first indication step). Specifically, when the disconnection detection unit 535 determines that the state is "abnormal", the indicator control unit 536 turns on a radial-side LED of the indicator 55. In contrast, when the disconnection detection unit 535 determines that the state is "normal," the indicator control unit 536 turns off the radial-side LED of the indicator 55. Then, the controller 53 ends the radial-side disconnection detection processing (ST2).

In this manner, in the radial-side disconnection detection processing (ST2), the first threshold is used to determine the presence or absence of disconnection of the detection coils C1 and C3 and the first line L1. As described above, the first threshold is not set to "0" but is set to a value corresponding to the noise components included in the first signal S1. Thus, when the detection coil C1, the detection coil C3, or the first line L1 is disconnected, the disconnection detection unit 535 can detect the disconnection even when the first signal includes noise components, that is, even when the voltage value is not "0". Herein, due to the setting of the coefficient for the first threshold, when the first signal S1 includes noise components having a signal level comparable to that of the combined signal S13 in a normal state, the disconnection detection unit 535 may fail to detect disconnection and may erroneously detect that no disconnection is present. However, the voltage values of the noise components are unstable and fluctuate greatly. Thus, although erroneous detection may occur momentarily, when the voltage values of the noise components fall below the first threshold, the disconnection detector 535 can detect disconnection of the detection coils C1 and C3 and the first line L1. Such an effect is similarly achieved in determining the presence or absence of disconnection of the detection coils C5 and C7 and the second line L2.

Further, in the radial-side disconnection detection processing (ST2), the disconnection detection unit 535 automatically detects disconnection of the detection coils C1, C3, C5, and C7 and the first and second lines L1 and L2 by automatically determining the presence or absence of disconnection of the detection coils C1, C3, C5, and C7 and the first and second lines L1 and L2 using the combined signals S13 and S57 used to detect the wear amount in the radial direction. Thus, the present device 5 does not require dedicated wiring or circuitry for performing the radial-side disconnection detection processing (ST2). In addition, the present device 5 does not require access from outside the present device 5 to terminals (a terminal block) connected to the first line L1 and the second line L2. That is, the present device 5 does not require access from outside the present device 5 to the terminal block in order to check the presence or absence of disconnection of the detection coils C1, C3, C5, and C7 or the like. Accordingly, a user of the pump 1 can safely check the presence or absence of disconnection of the detection coils C1, C3, C5, and C7 and the first to second lines L1 and L2 without stopping the pump 1.

Note that, in the present invention, the disconnection detection unit 535 may detect disconnection of the detection coils C1, C3, and the first line L1 when the acquired voltage value falls below the first threshold multiple times during a predetermined period of time. This detection method is also applicable to detecting disconnection of the detection coils C5, C7, and the second line L2.

### Thrust-side Disconnection Detection Processing

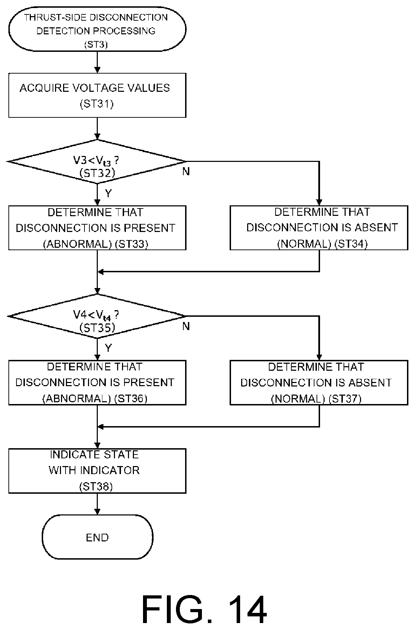

Fig. 14 is a flowchart illustrating an example of thrust-side disconnection detection processing (ST3).

The "thrust-side disconnection detection processing (ST3)" is processing for detecting the presence or absence of disconnection of the lines for the signals (combined signals S24 and S68) used to detect the wear amounts of the bearings 32 and 33 in the thrust direction. That is, the thrust-side disconnection detection processing (ST3) is processing for automatically detecting the presence or absence of disconnection of the detection coils C2, C4, C6, and C8 and the third to fourth lines L3 to L4.

First, the second acquisition unit 532 acquires the voltage value "V3" of the third signal S3 input to the A/D converter 52 from the third line L3, and acquires the voltage value "V4" of the fourth signal S4 input to the A/D converter 52 from the fourth line L4 (ST31: second acquisition step). The voltage values "V3" and "V4" are acquired at predetermined time intervals (e.g., every 10 ms). Herein, when the detection coils C2, C4, C6, and C8 and the third to fourth lines L3 to L4 are not disconnected, the second acquisition unit 532 acquires the combined signal S24 as the third signal S3 and acquires the combined signal S68 as the fourth signal S4.

Note that, in the present invention, the processing (ST31) may be substituted by the processing (ST11) in the update processing (ST1). That is, the second acquisition unit 532 may acquire the voltage values "V3" and "V4" acquired in the processing (ST11).

Then, the disconnection detection unit 535 compares the voltage value "V3" of the acquired combined signal S24 with the third threshold "Vₜ₃" (ST32: third comparison step).

When the voltage value "V3" is less than the third threshold "Vₜ₃" ("Y" in ST32), the disconnection detection unit 535 determines that a disconnection is present in the detection coil C2, the detection coil C4, and the third line L3, i.e., that the state is abnormal (ST33). That is, the disconnection detection unit 535 detects disconnection of the detection coils C2 and C4 and the third line L3. In this case, the third signal S3 does not include the combined signal S24 and may include noise components. In other words, the noise components may flow through the third line L3 as the third signal S3.

In contrast, when the voltage value "V3" is equal to or greater than the third threshold value "Vₜ₃" ("N" in ST32), the disconnection detection unit 535 determines that no disconnection is present in the detection coils C2 and C4 and the third line L3, i.e., that the state is normal (ST34). In this case, the combined signal S24 flows through the third line L3 as the third signal S3.

Then, the disconnection detection unit 535 compares the voltage value "V4" of the acquired combined signal S68 with the fourth threshold "Vₜ₄" (ST35: fourth comparison step).

When the voltage value "V4" is less than the second threshold "Vₜ₄" ("Y" in ST35), the disconnection detection unit 535 determines that disconnection is present in the detection coil C6, the detection coil C8, and the fourth line L4, i.e., that the state is abnormal (ST36). That is, the disconnection detection unit 535 detects disconnection of the detection coils C6 and C8 and the fourth line L4. In this case, the fourth signal S4 does not include the combined signal S68 and may include noise components. In other words, the noise components may flow through the fourth line L4 as the fourth signal S4.

In contrast, when the voltage value "V4" is equal to or greater than the fourth threshold "Vₜ₄" ("N" in ST35), the disconnection detection unit 535 determines that no disconnection is present in the detection coils C6 and C8 and the fourth line L4, i.e., that the state is normal (ST37). In this case, the combined signal S68 flows through the fourth line L4 as the fourth signal S4.

Then, the indicator control unit 536 changes the indication mode of the indicator 55 based on the determination result of the disconnection detection unit 535 (ST38: second indication step). Specifically, when the disconnection detection unit 535 determines that the state is "abnormal", the indicator control unit 536 turns on a thrust-side LED of the indicator 55. In contrast, when the disconnection detection unit 535 determines that the state is "normal," the indicator control unit 536 turns off the thrust-side LED of the indicator 55. Then, the controller 53 ends the thrust-side disconnection detection processing (ST3).

In this manner, in the thrust-side disconnection detection processing (ST3), the third threshold is used to determine the presence or absence of disconnection of the detection coils C2 and C4 and the third line L3. As described above, the third threshold is not set to "0" but is set to a value corresponding to the noise components included in the third signal. Thus, when the detection coil C2, the detection coil C4, or the third line L3 is disconnected, the disconnection detection unit 535 can detect the disconnection even when the third signal includes noise components, that is, even when the voltage value is not "0". Such an effect is similarly achieved in determining the presence or absence of disconnection of the detection coils C6 and C8 and the fourth line L4.

Further, in the thrust-side disconnection detection processing (ST3), the disconnection detection unit 535 automatically detects disconnection of the detection coils C2, C4, C6, and C8 and the third and fourth lines L3 and L4 by automatically determining the presence or absence of disconnection of the detection coils C2, C4, C6, and C8 and the third and fourth lines L3 and L4 using the combined signals S24 and S68 used to determine whether to add or subtract an offset voltage. That is, the disconnection detection unit 535 detects disconnection by using the combined signals S24 and S68 necessary for generating the difference signal (Sd) used to detect the wear amount in the thrust direction. Thus, the present device 5 does not require dedicated wiring or circuitry for performing the thrust-side disconnection detection processing (ST3). That is, the present detection method can be implemented in a conventional motor bearing wear detection device merely by adding the present detection program, without changing the wiring or circuit configuration. In addition, the present device 5 does not require access from outside the present device 5 to terminals (a terminal block) connected to the third line L3 and the fourth line L4. That is, the present device 5 does not require access from outside the present device 5 to the terminal block in order to check the presence or absence of disconnection of the detection coils C2, C4, C6, and C8 or the like. Accordingly, a user of the pump 1 can safely check the presence or absence of disconnection of the detection coils C2, C4, C6, and C8 and the third to fourth lines L3 and L4 without stopping the pump 1.

### Wear Amount Detection Processing

Fig. 15 is a flowchart illustrating an example of wear amount detection processing (ST4).

The "wear amount detection processing (ST4)" is processing for detecting the wear amounts of the bearings 32 and 33 based on the combined signals S13, S57, S24, and S68. The wear amount detection processing (ST4) is an example of the wear amount detection method performed by the present device 5.

The detection coils C1 to C8 continuously output detection signals during rotation of the rotor 36. The combined signals S13 and S57 from the detection coils C1, C3, C5, and C7 flow through the first and second lines L1 and L2 and are input to the A/D converter 52.

The detection signals (combined signals S24 and S68) from the detection coils C2, C4, C6, and C8 are input to the arithmetic circuit 56c via the signal lines L15 and L16. In the arithmetic circuit 56c, the offset processing is performed, and a difference value is calculated. The difference value is converted into an absolute value by the difference absolute value conversion circuit 56d. The combined signal S24 after the offset processing, the combined signal 68, and the signal indicating the absolute value, i.e., the difference signal (Sd), are input to the A/D converter 52.

In the wear amount detection processing (ST4), the wear amount detection unit 531 individually performs wear amount detection processing in the radial direction (ST41) and wear amount detection processing in the thrust direction (ST42). Since the wear amount detection processing in the radial direction (ST41) and the wear amount detection processing in the thrust direction (ST42) are well-known processing, only an outline thereof will be described below.

In the wear amount detection processing in the radial direction (ST41), the first acquisition unit 530 acquires the voltage values "V1" and "V2" of the combined signals S13 and S57. Then, the wear amount detection unit 531 detects the wear amounts of the bearings 32 and 33 based on the second correspondence relationship information and the voltage values "V1" and "V2". Then, the wear amount detection unit 531 compares the two wear amounts and selects the larger wear amount as the wear amount in the radial direction. The detected wear amount is stored, for example, in the storage 54 as log information.

Note that, in the present invention, the first acquisition unit 530 may acquire the voltage values "V1" and "V2" acquired in the processing (ST11).

In the wear amount detection processing in the thrust direction (ST42), the first acquisition unit 530 acquires the voltage value (absolute value) "Vd" of the difference signal (Sd). The wear amount detection unit 531 detects the wear amounts of the bearings 32 and 33 in the thrust direction based on the first correspondence relationship information and the voltage value "Vd". As described above, the difference signal (Sd) is generated from the combined signals S24 and S68. In other words, the wear amount detection unit 531 detects the wear amounts of the bearings 32 and 33 in the thrust direction based on the combined signals S24 and S68. The detected wear amounts are stored, for example, in the storage 54 as log information.

Then, the indicator control unit 536 determines the indication mode of the indicator 55 based on the detected wear amounts and causes the indicator 55 to indicate in the determined indication mode (ST43).

### Conclusion (1)

According to the embodiment described above, the present device 5 includes the wear amount detection unit 531, the second acquisition unit 532, and the disconnection detection unit 535. The wear amount detection unit 531 detects the wear amounts of the bearings 32 and 33 in the radial direction based on the voltage values of the respective combined signals S13 and S57, and detects the wear amounts of the bearings 32 and 33 in the thrust direction based on the voltage values of the respective combined signals S24 and S68. The second acquisition unit 532 acquires the first signal S1 flowing through the first line L1, the second signal S2 flowing through the second line L2, the third signal S3 flowing through the third line L3, and the fourth signal S4 flowing through the fourth line L4. The disconnection detection unit 535 detects the presence or absence of disconnection of the detection coils C1 and C3 and the first line L1 based on the voltage value of the first signal S1 acquired through the first line L1 and the first threshold, detects the presence or absence of disconnection of the detection coils C5 and C7 and the second line L2 based on the voltage value of the second signal S2 acquired through the second line L2 and the second threshold, detects the presence or absence of disconnection of the detection coils C2 and C4 and the third line L3 based on the voltage value of the third signal S3 acquired through the third line L3 and the third threshold, and detects the presence or absence of disconnection of the detection coils C6 and C8 and the fourth line L4 based on the voltage value of the fourth signal S4 acquired through the fourth line L4 and the fourth threshold. When the disconnection detection unit 535 does not detect disconnection, the combined signal S13 flows through the first line L1 as the first signal S1, the combined signal S57 flows through the second line L2 as the second signal S2, the combined signal S24 flows through the third line L3 as the third signal S3, and the combined signal S68 flows through the fourth line L4 as the fourth signal S4. The first threshold is set to be smaller than the voltage value of the combined signal S13, the second threshold is set to be smaller than the voltage value of the combined signal S57, the third threshold is set to be smaller than the voltage value of the combined signal S24, and the fourth threshold is set to be smaller than the voltage value of the combined signal S68. According to this configuration, the present device 5 does not require dedicated wiring or circuitry for performing the present detection method. In addition, the present device 5 can automatically detect the presence or absence of disconnection of the detection coils C1 to C8 and the first to fourth lines L1 to L4. Accordingly, a user of the pump 1 can safely check the presence or absence of disconnection of the detection coils C1 to C8 and the first to fourth lines L1 and L4 without stopping the pump 1.

According to the embodiment described above, the RAM 53b updates and stores the first to fourth maximum voltage values. The first threshold is set based on the first maximum voltage value, the second threshold is set based on the second maximum voltage value, the third threshold is set based on the third maximum voltage value, and the fourth threshold is set based on the fourth maximum voltage value. According to this configuration, the first to fourth thresholds are set so as to vary depending on the latest trend in the voltage values. Thus, the present device 5 can appropriately detect the presence or absence of disconnection even when the voltage values of the combined signals S13, S57, S24, and S68 increase over time, and can appropriately detect the presence or absence of disconnection even when the driving frequency is increased.

Further, according to the embodiment described above, the first threshold is set based on signal levels of noise components included in the first signal S1, the second threshold is set based on signal levels of noise components included in the second signal S2, the third threshold is set based on signal levels of noise components included in the third signal S3, and the fourth threshold is set based on signal levels of noise components included in the fourth signal S4. According to this configuration, even when noise components are included in the first to fourth signals S1 to S4, the present device 5 can automatically detect the presence or absence of disconnection of the detection coils C1 to C8 and the first to fourth lines L1 to L4.

According to the embodiment described above, the first threshold and the second threshold are smaller than the third threshold and the fourth threshold. According to this configuration, the first to fourth thresholds can be set to values according to the signal levels of the respective combined signals S13, S57, S24, and S68. As a result, the disconnection detection unit 535 can reliably detect the presence or absence of disconnection of the detection coils C2, C4, C6, and C8 and the third to fourth lines L3 to L4, in particular without being affected by noise components.

According to the embodiment described above, the present device 5 includes the threshold setting unit 534 that sets the first to fourth thresholds. According to this configuration, the present device 5 can automatically set the first to fourth thresholds depending on signal levels of noise components and the latest trend in the voltage values.

Note that, in the embodiment described above, the present detection method is performed by the controller 53. Alternatively, the present detection method may be performed by an external arithmetic device (e.g., a computer) connected to the present device 5.

Note that, in the embodiment described above, some or all of the information stored in the RAM 53b (e.g., the first to fourth maximum voltage values, the first to fourth thresholds, and the like) may be stored in the storage 54.

Note that, in the embodiment described above, the present device 5 may have a function of acquiring signal levels of noise components from respective voltage values of the first to fourth signals S1 to S4 and setting coefficients based on the acquired signal levels of the noise components. Acquisition of signal levels of noise components is performed using, for example, known filtering processing and FFT.

Note that, in the embodiment described above, the present device 5 may detect the presence or absence of disconnection of the detection coils C2, C4, C6, and C8, the third to fourth lines L3 to L4, and the signal lines L15 and L16, based on a difference signal (Sd) and a threshold corresponding to the difference signal (Sd) (i.e., a fifth threshold). As described above, the difference signal (Sd) may have a normal value as long as one of the combined signals is present. However, since one of the voltage values for calculating the difference value significantly decreases, the voltage value, that is, the absolute value, of the difference signal (Sd) in an abnormal state becomes larger than the voltage value in a normal state. Thus, unlike the first to fourth thresholds, the fifth threshold is set to a value larger than the voltage value of the difference signal (Sd) in a normal state, thereby enabling the present device 5 to detect the presence or absence of disconnection based on the voltage value of the difference signal (Sd) and the fifth threshold. In this case, the present device 5 also stores the maximum value of the voltage value of the difference signal (Sd) in the storage 54 as a fifth maximum voltage value. Herein, the voltage value in an abnormal state may greatly deviate from the latest trend of voltage values in a normal state. Thus, the present device 5 may periodically acquire an amount of change in the voltage value of the difference signal (Sd), and may detect the presence or absence of disconnection of the detection coils C2, C4, C6, and C8, the third and fourth lines L3 and L4, and the signal lines L15 and L16 based on the amount of change.

Note that, in the embodiment described above, the present device 5 need not include the threshold setting unit 534. In this case, since the first to fourth thresholds are fixed values, the accuracy of disconnection detection is reduced.

Note that, in the embodiment described above, the first to fourth thresholds need only be set to be smaller than the voltage values of the corresponding combined signals (S13, S57, S24, S68), and need not necessarily be set based on the maximum voltage values or noise components.

Note that, in the embodiment described above, the present detection program and the coefficients may be stored in the storage 54.

### Motor Bearing Wear Monitoring Device (2)

Next, another embodiment of the present device (hereinafter referred to as the "second embodiment") will be described below, focusing on differences from the embodiment described above (hereinafter referred to as the "first embodiment"). The second embodiment differs from the first embodiment in that the presence or absence of disconnection is estimated using a machine learning model. In the following description, components in common with the first embodiment are indicated with the same reference signs, and the description thereof will be omitted.

### Configuration of Motor Bearing Wear Monitoring Device (2)

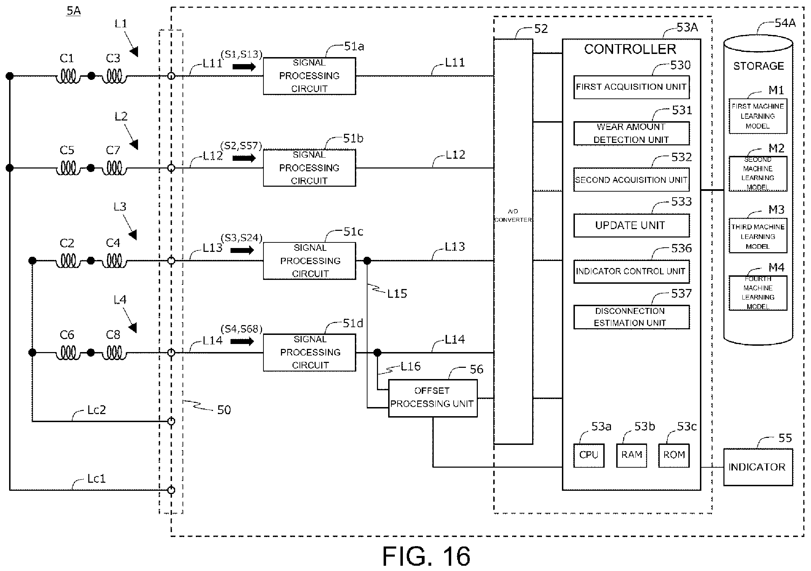

Fig. 16 is a functional block diagram illustrating the another embodiment (the second embodiment) of the present device.

The present device 5A includes the eight detection coils C1 to C8, the connection portion 50, the two common lines Lc1 and Lo2, the six signal lines L11 to L16, the four signal processing circuits 51a to 51d, the A/D converter 52, a controller 53A, a storage 54A, the indicator 55, and the offset processing unit 56. The A/D converter 52 and the controller 53A are implemented by a microcomputer, for example.

The configuration of the present device 5A is common to that of the present device 5 of the first embodiment, except for the controller 53A and the storage 54A. In the present device 5A, the present estimation program estimates the presence or absence of disconnection using a machine learning model described later, in place of the present detection program of the first embodiment. That is, the present device 5A performs, in place of the present detection method, a disconnection estimation method for the detection coils C1 to C8 using a machine learning model (hereinafter simply referred to as an "estimation method"). Details of the machine learning model will be described later.

The controller 53A controls the overall operation of the present device 5A. The controller 53A includes, for example, a processor such as a CPU 53a, a volatile memory such as a RAM 53b that functions as a work area for the CPU 53a, and a non-volatile memory such as a ROM 53c that stores various types of information such as the present estimation program and other control programs (for example, the wear amount detection program). The controller 53A includes the first acquisition unit 530, the wear amount detection unit 531, the second acquisition unit 532, the update unit 533, the indicator control unit 536, and a disconnection estimation unit 537.

In the controller 53A, the present estimation program operates, and the present estimation program cooperates with hardware resources of the present device 5A and implements the present estimation method described later. The present estimation program is executed by the processor (CPU 53a) constituting the controller 53A, so that the processor functions as the second acquisition section 532, the indicator control unit 536, and the disconnection estimation unit 537, and performs the estimation method. Further, the present estimation program and the wear amount detection program are executed by a computer, so that the computer functions as the present device 5A.

Note that, in the present invention, the estimation program may be stored in the storage 54A. The present estimation program may be stored in a non-transitory storage medium (e.g., a CD, a DVD, a USB memory, or the like) in an installable file format or an executable file format, and may be provided to the present device 5A via a dedicated reading device.

The disconnection estimation unit 537 estimates the presence or absence of disconnection of the detection coils C1 to C8 and the first to fourth lines L1 to L4 based on the first to fourth signals S1 to S4, the first to fourth maximum voltage values, and machine learning models described later (first machine learning model M1, second machine learning model M2, third machine learning model M3, and fourth machine learning model M4). A specific operation of the disconnection estimation unit 537 will be described later.

The storage 54A stores information necessary for operations of the present device 5A (e.g., first to fourth machine learning models M1 to M4, the offset information, the first correspondence relationship information, the second correspondence relationship information). The storage 54A is, for example, non-volatile memory such as EEPROM or flash memory. The storage 54A is an example of the machine learning model storage unit in the present invention.

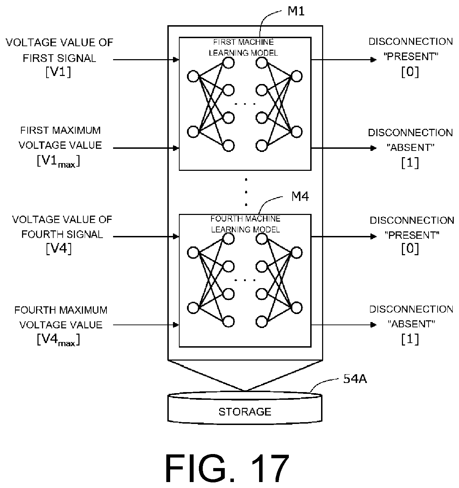

Fig. 17 is a schematic diagram illustrating an example of information (first to fourth machine learning models M1 to M4) stored in the storage 54A.

The "first machine learning model M1" is a trained machine learning algorithm, that is, a machine learning model, trained to output the presence or absence of disconnection, that is, a normal/abnormal state, of the detection coils C1 and C3 and the first line L1 when the voltage value "V1" of the first signal S1 and the first maximum voltage value "V1ₘₐₓ" are input. The first machine learning model M1 is generated in advance, for example, by a machine learning device and stored in the storage 54A.

The "second machine learning model M2" is a machine learning model trained to output the presence or absence of disconnection, that is, a normal/abnormal state, of the detection coils C5 and C7 and the second line L2 when the voltage value "V2" of the second signal S2 and the second maximum voltage value "V2ₘₐₓ" are input. The second machine learning model M2 is generated in advance, for example, by a machine learning device and stored in the storage 54A.

The "third machine learning model M3" is a machine learning model trained to output the presence or absence of disconnection, that is, a normal/abnormal state, of the detection coils C2 and C4 and the third line L3 when the voltage value "V3" of the third signal S3 and the third maximum voltage value "V3ₘₐₓ" are input. The third machine learning model M3 is generated in advance, for example, by a machine learning device and stored in the storage 54A.

The "fourth machine learning model M4" is a machine learning model trained to output the presence or absence of disconnection, that is, a normal/abnormal state, of the detection coils C6 and C8 and the fourth line L4 when the voltage value "V4" of the fourth signal S4 and the fourth maximum voltage value "V4ₘₐₓ" are input. The fourth machine learning model M4 is generated in advance, for example, by a machine learning device and stored in the storage 54A.

The first machine learning model M1 and the second machine learning model M2 are examples of a radial machine learning model in the present invention, and the third machine learning model M3 and the fourth machine learning model M4 are examples of a thrust machine learning model in the present invention. That is, the radial machine learning model includes the first machine learning model M1 and the second machine learning model M2, and the thrust machine learning model includes the third machine learning model M3 and the fourth machine learning model M4.

Herein, machine learning by the machine learning device is performed, for example, by training a known machine learning algorithm (for example, a neural network having an input layer, a plurality of intermediate layers, and an output layer) using training data. The "training data" includes information serving as input data for the machine learning algorithm (machine learning model), and information serving as output data, that is, target data, associated with the input data.

The "input data" corresponds to explanatory variables in machine learning and, in the present embodiment, includes the voltage values of the first to fourth signals S1 to S4 and the first to fourth maximum voltage values in a predetermined state (predetermined driving conditions, a predetermined wear state, a predetermined period, and the presence or absence of disconnection). As described above, when the detection coils C1 and C3 and the first line L1 are not disconnected, the combined signal S13 flows as the first signal S1, and the voltage value of the first signal S1 is a normal value larger than the first threshold. In contrast, when the detection coil C1, the detection coil C3, or the first line L1 is disconnected, the first signal S1 does not include the combined signal S13, and the voltage value of the first signal S1 is an abnormal value smaller than the first threshold. Similarly, when the detection coils C2 and C4 to C8 and the second to fourth lines L2 to L4 are not disconnected, the voltage values of the second to fourth signals S2 to S4 are normal values larger than the corresponding second to fourth thresholds. In contrast, when at least one of the detection coils C2 and C4 to C8 and the second to fourth lines L2 to L4 is disconnected, the voltage values of the second to fourth signals S2 to S4 are abnormal values smaller than the corresponding second to fourth thresholds. Further, in the first embodiment, the first to fourth thresholds used for determining the presence or absence of disconnection are set as proportions of the first to fourth maximum voltage values. Thus, the first to fourth thresholds are proportional to the corresponding first to fourth maximum voltage values. Accordingly, the voltage value of the first signal S1 and the first maximum voltage value are correlated with the presence or absence of disconnection of the detection coils C1 and C3 and the first line L1. Similarly, the voltage values of the second to fourth signals S2 to S4 and the corresponding second to fourth maximum voltage values are correlated with the presence or absence of disconnection of the corresponding detection coils and lines, that is, the detection coils C5 and C7 and the second line L2, the detection coils C2 and C4 and the third line L3, and the detection coils C6 and C8 and the fourth line L4. In this way, there is a correlation between the input data and the output data. The input data is obtained, for example, by operating a test device that simulates the pump 1 under predetermined conditions for a predetermined period. Herein, the presence or absence of disconnection can be reproduced, for example, by turning on and off switches provided at a plurality of locations in the test device, such as between the detection coils C1 and C3 connected in series and between the detection coil C3 and the connection portion 50.

Note that the input data may be, for example, pseudo signals (voltage values) generated by a signal generation device during a predetermined period based on actual data (e.g., log data) previously acquired from a pump of the same model as the pump 1.

Herein, the "predetermined driving condition" is, for example, a driving frequency selected from among driving frequencies between 40 Hz and 60 Hz in accordance with the environment in which the pump 1 is installed. The "predetermined wear state" is, for example, a wear state in which the voltage value of each combined signal S13, S57, S24, and S68 is a normal value. The "predetermined period" is a period of time during which signals usable as training data can be obtained under the predetermined driving conditions and the predetermined wear state, for example, several seconds to several tens of seconds.

The "output data" corresponds to target variables in machine learning and, in the present embodiment, is information indicating the "presence" or "absence" of disconnection of the detection coils C1 to C8 and the first to fourth lines L1 to L4. For example, numerical values such as "0" and "1" are assigned to the "presence" and "absence" of disconnection. One output data item is associated with one corresponding input data item to constitute one training data item.

Note that, in the present invention, the output data is not limited to the two states of the "presence" and "absence" of disconnection. That is, for example, when there is a difference in the signal levels of noise components depending on the position of disconnection, the output data may include the "position of disconnection".

In the present invention, the machine learning algorithm used for machine learning need only be such that the first to fourth machine learning models M1 to M4 generated by machine learning using a plurality of pieces of training data can estimate the presence or absence of disconnection, and is not limited to a neural network. That is, for example, the machine learning algorithm may be a random forest, a decision tree, a support vector machine, or the like.

As illustrated in Fig. 17, the first machine learning model M1 generated in this way can output the "presence" or "absence" of disconnection of at least one of the detection coils C1 and C3 and the first line L1 when the voltage value of the first signal S1 and the first maximum voltage value are input. That is, the first machine learning model M1 is trained to output the "presence" or "absence" of disconnection of at least one of the detection coils C1 and C3 and the first line L1 when the voltage value of the first signal S1 and the first maximum voltage value are input as input data. Similarly, the second to fourth machine learning models M2 to M4 are trained to output the "presence" or "absence" of disconnection of at least one of the corresponding detection coils C2 and C4 to C8 and the corresponding second to fourth lines L2 to L4 when, as input data, the voltage values of the corresponding second to fourth signals S2 to S4 and the corresponding second to fourth maximum voltage values are input.

### Operation of Canned Motor Pump (Motor Bearing Wear Monitoring Device (2))

Next, the operation of the pump 1, that is, the estimation method, will be described below, focusing on the operation of the present device 5A.

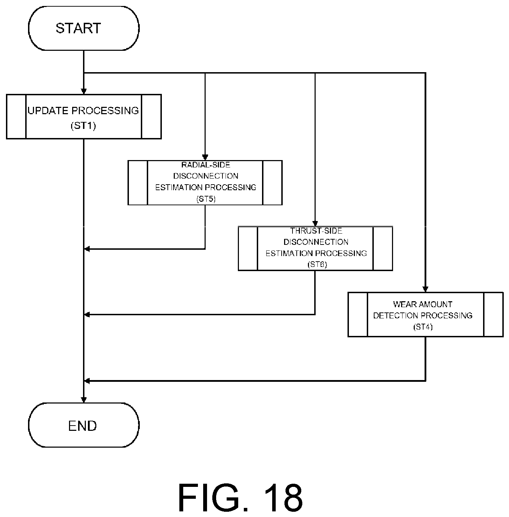

Fig. 18 is a flowchart illustrating an example of the operation of the present device 5A.

The operation of the pump 1 in the second embodiment is common to the operation of the pump 1 in the first embodiment, except that the present device 5A performs radial-side disconnection estimation processing (ST5) and thrust-side disconnection estimation processing (ST6) in place of radial-side disconnection detection processing (ST2) and thrust-side disconnection detection processing (ST3). That is, the present device 5A constantly and repeatedly performs update processing (ST1), radial-side disconnection estimation processing (ST5), thrust-side disconnection estimation processing (ST6), and wear amount detection processing (ST4). The radial-side disconnection estimation processing (ST5) and the thrust-side disconnection estimation processing (ST6) are an example of the estimation method. In the following description, Fig. 16 will be referred to as appropriate.

### Radial-side Disconnection Estimation Processing

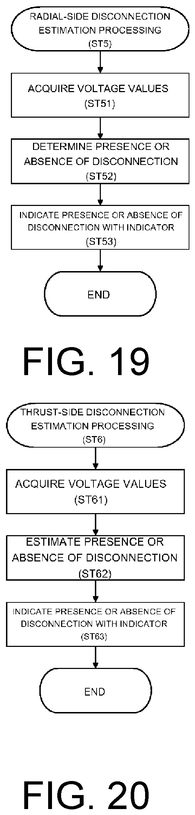

Fig. 19 is a flowchart illustrating an example of radial-side disconnection detection processing (ST5).

The "radial-side disconnection estimation processing (ST5)" is processing for estimating the presence or absence of disconnection of the lines for the signals (combined signals S13 and S57) used for detecting wear amounts of the bearings 32 and 33 in the radial direction. That is, the radial-side disconnection estimation processing (ST5) is processing that automatically estimates the presence or absence of disconnection of the detection coils C1, C3, C5, and C7 and the first to second lines L1 to L2.

First, the second acquisition unit 532 acquires a voltage value "V1" of the first signal S1 input to the A/D converter 52 from the first line L1, acquires a voltage value "V2" of the second signal S2 input to the A/D converter 52 from the second line L2, and acquires the first and second maximum voltage values "V1ₘₐₓ" and "V2ₘₐₓ" from the RAM 53b (ST51: first acquisition step). Acquisition of each voltage is performed at predetermined time intervals, for example, every 10 ms.

Next, the disconnection estimation unit 537 inputs the voltage value "V1" and the first maximum voltage value "V1ₘₐₓ" to the first machine learning model M1, and estimates the "presence" or "absence" of disconnection of the detection coils C1 and C3 and the first line L1 based on the output from the first machine learning model M1. Similarly, the disconnection estimation unit 537 inputs the voltage value "V2" and the second maximum voltage value "V2ₘₐₓ" to the second machine learning model M2, and estimates the "presence" or "absence" of disconnection of the detection coils C5 and C7 and the second line L2 based on the output from the second machine learning model M2.

Then, the indicator control unit 536 determines the indication mode of the indicator 55 based on the estimated "presence" or "absence" of disconnection, and causes the indicator 55 to indicate in the determined indication mode (ST53: first indication step). That is, for example, when disconnection is estimated to be "present", the indicator control unit 536 turns on the radial-side LED of the indicator 55. Then, the controller 53A ends the radial-side disconnection estimation processing (ST5).

### Thrust-side Disconnection Estimation Processing

Fig. 20 is a flowchart illustrating an example of thrust-side disconnection detection processing (ST6).

The "thrust-side disconnection estimation processing (ST6)" is processing for estimating the presence or absence of disconnection of the lines for the signals (combined signals S24 and S68) used for detecting wear amounts of the bearings 32 and 33 in the thrust direction. That is, the thrust-side disconnection estimation processing (ST6) is processing that automatically estimates the presence or absence of disconnection of the detection coils C2, C4, C6, and C8 and the third to fourth lines L3 to L4.

First, the second acquisition unit 532 acquires a voltage value "V3" of the third signal S3 input to the A/D converter 52 from the third line L3, acquires a voltage value "V4" of the fourth signal S4 input to the A/D converter 52 from the fourth line L4, and acquires the third and fourth maximum voltage values "V3ₘₐₓ" and "V4ₘₐₓ" from the RAM 53b (ST61: second acquisition step). Acquisition of each voltage is performed at predetermined time intervals, for example, every 10 ms.

Then, the disconnection estimation unit 537 inputs the voltage value "V3" and the third maximum voltage value "V3ₘₐₓ" to the third machine learning model M3, and estimates the "presence" or "absence" of disconnection of the detection coils C2 and C4 and the third line L3 based on the output from the third machine learning model M3. Similarly, the disconnection estimation unit 537 inputs the voltage value "V4" and the fourth maximum voltage value "V4ₘₐₓ" to the fourth machine learning model M4, and estimates the "presence" or "absence" of disconnection of the detection coils C6 and C8 and the fourth line L4 based on the output from the fourth machine learning model M4 (ST62: second estimation step).

Then, the indicator control unit 536 determines the indication mode of the indicator 55 based on the estimated "presence" or "absence" of disconnection, and causes the indicator 55 to indicate in the determined indication mode (ST63: second indication step). That is, for example, when disconnection is estimated to be "present", the indicator control unit 536 turns on the thrust-side LED of the indicator 55. Then, the controller 53A ends the thrust-side disconnection estimation processing (ST6).

### Conclusion (2)

According to the embodiment described above, the present device 5A includes the RAM 53b, the wear amount detection unit 531, the second acquisition unit 532, the disconnection estimation unit 537, and the storage 54A. The RAM 53b updates and stores the first to fourth maximum voltage values. The second acquisition unit 532 acquires the first to fourth maximum voltage values and the respective voltage values of the first to fourth signals S1 to S4. The storage 54A stores the first to fourth machine learning models M1 to M4. The disconnection estimation unit 537 inputs, to the corresponding first to fourth machine learning models M1 to M4, the respective voltage values of the first to fourth signals S1 to S4 and the respective first to fourth maximum voltage values, and estimates the presence or absence of disconnection of the detection coils C1 to C8 or the first to fourth lines L1 to L4. According to this configuration, the present device 5A does not require dedicated wiring or circuitry for performing the estimation method. In addition, the present device 5A can automatically estimate the presence or absence of disconnection of the detection coils C1 to C8 and the first to fourth lines L1 to L4 without performing threshold processing as in the present device 5 of the first embodiment. Accordingly, a user of the pump 1 can safely check the presence or absence of disconnection of the detection coils C1 to C8 and the first to fourth lines L1 and L4 without stopping the pump 1.

### Other Embodiments

Note that, in the embodiments described above, the number of detection coils C1 to C8 is not limited to "8" as long as the present invention can be implemented.

Note that, in the embodiments described above, the controllers 53 and 53A may be configured with a processor such as a digital signal processor (DSP), a graphics processing unit (GPU), or a general-purpose graphics processing unit (GPGPU), in place of the CPU 53a.

Note that, in the second embodiment described above, the estimation method is performed by the controller 53A. Alternatively, the estimation method may be performed by an external arithmetic device such as a computer connected to the present device 5A.

Note that, in the second embodiment described above, part of the information stored in the storage 54A, such as the first to fourth machine learning models M1 to M4, may be incorporated into the present estimation program and stored in the ROM 53c. In this case, the ROM 53c may function as a machine learning model storage in the present invention.

Note that, in the embodiments described above, the pump 1 need not include the present devices 5 and 5A. That is, for example, the detection coils C1 to C8 may be provided in the motor section 3, and the present devices 5 and 5A may be disposed separately from the pump section 2, the motor section 3, and the adapter 4. In this case, the present devices 5 and 5A may be connected to the detection coils C1 to C8 via a cable, or the present devices 5 and 5A and the motor section 3 may have a communication function, and the present devices 5 and 5A may be connected to the motor section 3 via a wireless communication line and configured to receive detection signals.

Note that, in the second embodiment described above, the present estimation program may be stored in the storage 54A.

Note that, in the embodiments described above, the pump 1 may include the detection coils C1 to C8 instead of the present devices 5 and 5A.

### Aspects of the Present Invention

Next, aspects of the present invention conceived from the embodiments described above will be described below with reference to the terms and reference signs described in the embodiments.

A first aspect of the present invention is a motor bearing wear monitoring device (e.g., motor bearing wear monitoring device 5) that monitors a wear state of bearings (e.g., bearings 32 and 33) supporting a rotary shaft (e.g., rotary shaft 31) of a rotor (e.g., rotor 36), based on a detection signal from each of a plurality of detection coils (e.g., detection coils C1 to C8) configured to detect changes in magnetic flux corresponding to mechanical positional changes of the rotor relative to a stator (e.g., stator 37) of a motor (e.g., motor section) of a canned motor pump (e.g., canned motor pump 1), in which the plurality of detection coils includes a pair of radial detection coils (e.g., detection coils C1 and C3, detection coils C5 and C7) configured to detect the changes in magnetic flux in a radial direction of the rotary shaft, and a pair of thrust detection coils (e.g., detection coils C2 and C4, detection coils C6 and C8) configured to detect the changes in magnetic flux in a thrust direction of the rotary shaft, the pair of radial detection coils and the pair of thrust detection coils are disposed at an end of the stator on one side or the other side in the thrust direction, the pair of radial detection coils is electrically connected to a radial signal line (e.g., first line L1, second line L2) through which a radial combined signal (e.g., combined signal S13, combined signal S57) obtained by combining the detection signals from the respective radial detection coils flows, and the pair of thrust detection coils is electrically connected to a thrust signal line (e.g., third line L3, fourth line L4) through which a thrust combined signal (e.g., combined signal S24, combined signal S68) obtained by combining the detection signals from the respective thrust detection coils flows, the motor bearing wear monitoring device including: a threshold storage (e.g., RAM 53b) that stores a radial threshold (e.g., first threshold, second threshold) set to be smaller than a voltage value of the radial combined signal and a thrust threshold (e.g., third threshold, fourth threshold) set to be smaller than a voltage value of the thrust combined signal; an acquisition unit (e.g., second acquisition unit 532) that acquires a radial line signal (e.g., first signal S1, second signal S2) flowing through the radial signal line and a thrust line signal (e.g., third signal S3, fourth signal S4) flowing through the thrust signal line; and a disconnection detection unit (e.g., disconnection detection unit 535) that detects, for each of the detection coils, the radial signal line, and the thrust signal line, presence or absence of disconnection, in which, when none of the detection coils, the radial signal line, and the thrust signal line is disconnected, the radial combined signal flows through the radial signal line as the radial line signal, and the thrust combined signal flows through the thrust signal line as the thrust line signal, and in which the disconnection detection unit detects, based on a voltage value of the radial line signal and the radial threshold, presence or absence of the disconnection of the radial detection coils and the radial signal line, and detects, based on a voltage value of the thrust line signal and the thrust threshold, presence or absence of the disconnection of the thrust detection coils and the thrust signal line. According to this configuration, a user of the pump can safely check the presence or absence of disconnection of the detection coils and the first to fourth lines without stopping the pump.

A second aspect of the present invention is the motor bearing wear monitoring device in the first aspect, further including a voltage value storage (e.g., RAM 53b) that updates and stores a radial maximum voltage value being a maximum value among voltage values of the radial combined signal, and a thrust maximum voltage value being a maximum value among voltage values of the thrust combined signal, in which the radial threshold is set based on the radial maximum voltage value, and the thrust threshold is set based on the thrust maximum voltage value. According to this configuration, the present device can appropriately detect the presence or absence of disconnection even when the voltage value of each combined signal increases over time.

A third aspect of the present invention is the motor bearing wear monitoring device in the second aspect in which the radial threshold is set based on signal levels of noise components included in the radial line signal, and the thrust threshold is set based on signal levels of noise components included in the thrust line signal. According to this configuration, even when the first to fourth signals contain noise components, the present device can automatically detect the presence or absence of disconnection of the detection coils and the first to fourth lines.

A fourth aspect of the present invention is the motor bearing wear monitoring device in the third aspect, in which the radial threshold is smaller than the thrust threshold. According to this configuration, the first to fourth thresholds can be set to values corresponding to signal levels of the combined signals.

A fifth aspect of the present invention is the motor bearing wear monitoring device in any one of the first to fourth aspects, further including a threshold setting unit (e.g., threshold setting unit 534) that sets each of the radial threshold and the thrust threshold. According to this configuration, the present device can automatically set the first to fourth thresholds to values corresponding to the signal levels of noise components and the latest trends in the voltage values.

A sixth aspect of the present invention is the motor bearing wear monitoring device in the first aspect, in which the plurality of detection coils includes a pair of first radial detection coils (e.g., detection coils C1 and C3) and a pair of second radial detection coils (e.g., detection coils C5 and C7) each functioning as the pair of radial detection coils, and a pair of first thrust detection coils (e.g., detection coils C2 and C4) and a pair of second thrust detection coils (e.g., detection coils C6 and C8) each functioning as the pair of thrust detection coils, the pair of first radial detection coils and the pair of first thrust detection coils are disposed at an end of the stator on the one side, and the pair of second radial detection coils and the pair of second thrust detection coils are disposed at an end of the stator on the other side, the radial signal line includes a first line (e.g., first line L1) electrically connected to the pair of first radial detection coils and through which a first combined signal (e.g., combined signal S13) obtained by combining the detection signals from the respective first radial detection coils flows as the radial combined signal, and a second line (e.g., second line L2) electrically connected to the pair of second radial detection coils and through which a second combined signal (e.g., combined signal S57) obtained by combining the detection signals from the respective second radial detection coils flows as the radial combined signal, the thrust signal line includes a third line (e.g., third line L3) electrically connected to the pair of first thrust detection coils and through which a third combined signal (e.g., combined signal S24) obtained by combining the detection signals from the respective first thrust detection coils flows as the thrust combined signal, and a fourth line (e.g., fourth line L4) electrically connected to the pair of second thrust detection coils and through which a fourth combined signal (e.g., combined signal S68) obtained by combining the detection signals from the respective second thrust detection coils flows as the thrust combined signal, the radial threshold includes a first threshold set to be smaller than a voltage value of the first combined signal, and a second threshold set to be smaller than a voltage value of the second combined signal, the thrust threshold includes a third threshold set to be smaller than a voltage value of the third combined signal, and a fourth threshold set to be smaller than a voltage value of the fourth combined signal, the acquisition unit acquires a first signal (e.g., first signal S1) flowing through the first line and a second signal (e.g., second signal S2) flowing through the second line as the radial line signals, and a third signal (e.g., third signal S3) flowing through the third line and a fourth signal (e.g., fourth signal S4) flowing through the fourth line as the thrust line signals, when none of the detection coils, the first line, the second line, the third line, and the fourth line is disconnected, the first combined signal flows through the first line as the first signal, the second combined signal flows through the second line as the second signal, the third combined signal flows through the third line as the third signal, the fourth combined signal flows through the fourth line as the fourth signal, the disconnection detection unit detects presence or absence of the disconnection of the first radial detection coils and the first line based on a voltage value of the first signal and the first threshold, detects presence or absence of the disconnection of the second radial detection coils and the second line based on a voltage value of the second signal and the second threshold, detects presence or absence of the disconnection of the third thrust detection coils and the third line based on a voltage value of the third signal and the third threshold, and detects presence or absence of the disconnection of the fourth thrust detection coils and the fourth line based on a voltage value of the fourth signal and the fourth threshold. According to this configuration, the present device can appropriately detect the presence or absence of disconnection of the first to fourth lines even when the voltage value of each combined signal increases over time.

A seventh aspect of the present invention is a motor bearing wear monitoring device (e.g., motor bearing wear monitoring device 5A) that monitors a wear state of bearings supporting a rotary shaft of a rotor, based on a detection signal from each of a plurality of detection coils configured to detect changes in magnetic flux corresponding to mechanical positional changes of the rotor relative to a stator of a motor of a canned motor pump, in which the plurality of detection coils includes a pair of radial detection coils configured to detect the changes in magnetic flux in a radial direction of the rotary shaft, and a pair of thrust detection coils configured to detect the changes in magnetic flux in a thrust direction of the rotary shaft, the pair of radial detection coils and the pair of thrust detection coils are disposed at an end of the stator on one side or the other side in the thrust direction, the pair of radial detection coils is electrically connected to a radial signal line through which a radial combined signal obtained by combining the detection signals from the respective radial detection coils flows, and the pair of thrust detection coils is electrically connected to a thrust signal line through which a thrust combined signal obtained by combining the detection signals from the respective thrust detection coils flows, the motor bearing wear monitoring device including: a voltage-value storage that updates and stores a radial maximum voltage value that is a maximum value among voltage values of the radial combined signal and a thrust maximum voltage value that is a maximum value among voltage values of the thrust combined signal; an acquisition unit that acquires a radial line signal flowing through the radial signal line, a thrust line signal flowing through the thrust signal line, the radial maximum voltage value, and the thrust maximum voltage value; a machine-learning-model storage (e.g., storage 54A) that stores a radial machine learning model (e.g., first machine learning model M1, second machine learning model M2) trained by machine learning to estimate presence or absence of disconnection of the radial detection coils and the radial signal line in response to input of a voltage value of the radial line signal and the radial maximum voltage value, and a thrust machine learning model (e.g., third machine learning model M3, fourth machine learning model M4) trained by machine learning to estimate presence or absence of disconnection of the thrust detection coils and the thrust signal line in response to input of a voltage value of the thrust line signal and the thrust maximum voltage value; and a disconnection estimation unit (e.g., disconnection estimation unit 537) that estimates, for each of the detection coils, the radial signal line, and the thrust signal line, presence or absence of disconnection, in which, when none of the detection coils, the radial signal line, and the thrust signal line is disconnected, the radial combined signal flows through the radial signal line as the radial line signal, and the thrust combined signal flows through the thrust signal line as the thrust line signal, and the disconnection estimation unit estimates, for each of the radial detection coils and the radial signal line, presence or absence of disconnection by inputting the voltage value of the radial line signal and the radial maximum voltage value to the radial machine learning model, and estimates, for each of the thrust detection coils and the thrust signal line, presence or absence of disconnection by inputting the voltage value of the thrust line signal and the thrust maximum voltage value to the thrust machine learning model. According to this configuration, the present device can automatically estimate the presence or absence of disconnection of the detection coils and the first to fourth lines without performing the threshold processing.

An eighth aspect of the present invention is a disconnection detection program that configures a computer to operate as the motor bearing wear monitoring device in the first aspect. According to this configuration, a user of the pump can safely check the presence or absence of disconnection of the detection coils and the first to fourth lines without stopping the pump.

A ninth aspect of the present invention is a disconnection estimation program that configures a computer to operate as the motor bearing wear monitoring device in the seventh aspect. According to this configuration, the present device can automatically estimate the presence or absence of disconnection of the detection coils and the first to fourth lines without performing the threshold processing.

A tenth aspect of the present invention is a disconnection detection method (e.g., radial-side disconnection detection processing (ST2), thrust-side disconnection detection processing (ST3)) performed by a motor bearing wear monitoring device (e.g., motor bearing wear monitoring device 5) that monitors a wear state of bearings supporting a rotary shaft of a rotor based on a detection signal from each of a plurality of detection coils configured to detect changes in magnetic flux corresponding to mechanical positional changes of the rotor relative to a stator of a motor of a canned motor pump, in which the plurality of detection coils includes a pair of radial detection coils configured to detect the changes in magnetic flux in a radial direction of the rotary shaft, and a pair of thrust detection coils configured to detect the changes in magnetic flux in a thrust direction of the rotary shaft, the pair of radial detection coils and the pair of thrust detection coils are disposed at an end of the stator on one side or the other side in the thrust direction, the pair of radial detection coils is electrically connected to a radial signal line through which a radial combined signal obtained by combining the detection signals from the respective radial detection coils flows, the pair of thrust detection coils is electrically connected to a thrust signal line through which a thrust combined signal obtained by combining the detection signals from the respective thrust detection coils flows, the motor bearing wear monitoring device includes a threshold storage that stores a radial threshold set to be smaller than a voltage value of the radial combined signal and a thrust threshold set to be smaller than a voltage value of the thrust combined signal, and, when none of the detection coils, the radial signal line, and the thrust signal line is disconnected, the radial combined signal flows through the radial signal line as a radial line signal, and the thrust combined signal flows through the thrust signal line as a thrust line signal, the disconnection detection method including: an acquisition step (e.g., first acquisition step (ST21), second acquisition step (ST31)) of acquiring, by the motor bearing wear monitoring device, the radial line signal from the radial signal line and acquiring, by the motor bearing wear monitoring device, the thrust line signal from the thrust signal line; and a disconnection detection step (e.g., first comparison step (ST22), second comparison step (ST25), third comparison step (ST32), fourth comparison step (ST35)) of detecting, by the motor bearing wear monitoring device, the disconnection for each of the radial detection coils and the radial signal line based on a voltage value of the radial line signal and the radial threshold, and detecting, by the motor bearing wear monitoring device, the disconnection for each of the thrust detection coils and the thrust signal line based on a voltage value of the thrust line signal and the thrust threshold. According to this configuration, a user of the pump can safely check the presence or absence of disconnection of the detection coils and the first to fourth lines without stopping the pump.

### [Reference signs List]

1 Canned motor pump
3 Motor section
31 Rotary shaft
32 Bearing
33 Bearing
36 Rotor
37 Stator
5 Motor bearing wear monitoring device
53a CPU (Processor)
53b RAM (Threshold storage, Voltage value storage)
531 Wear amount detection unit
532 Second acquisition unit (Acquisition unit)
534 Threshold setting unit
535 Disconnection detection unit
5A Motor bearing wear monitoring device
537 Disconnection estimation unit
54A Storage (Machine learning model storage)
C1 Detection coil (Radial detection coil, First radial detection coil)
C2 Detection coil (Thrust detection coil, First thrust detection coil)
C3 Detection coil (Radial detection coil, First radial detection coil)
C4 Detection coil (Thrust detection coil, First thrust detection coil)
C5 Detection coil (Radial detection coil, Second radial detection coil)
C6 Detection coil (Thrust detection coil, Second thrust detection coil)
C7 Detection coil (Radial detection coil, Second radial detection coil)
C8 Detection coil (Thrust detection coil, Second thrust detection coil)
L1 First line (Radial signal line)
L2 Second line (Radial signal line)
L3 Third line (Thrust signal line)
L4 Fourth line (Thrust signal line)
M1 First machine learning model (Radial machine learning model)
M2 Second machine learning model (Radial machine learning model)
M3 Third machine learning model (Thrust machine learning model)
M4 Fourth machine learning model (Thrust machine learning model)

## Claims

1. A motor bearing wear monitoring device that monitors a wear state of bearings supporting a rotary shaft of a rotor, based on a detection signal from each of a plurality of detection coils configured to detect changes in magnetic flux corresponding to mechanical positional changes of the rotor relative to a stator of a motor of a canned motor pump, wherein
the plurality of detection coils includes
a pair of radial detection coils configured to detect the changes in magnetic flux in a radial direction of the rotary shaft, and
a pair of thrust detection coils configured to detect the changes in magnetic flux in a thrust direction of the rotary shaft,
the pair of radial detection coils and the pair of thrust detection coils are disposed at an end of the stator on one side or the other side in the thrust direction,
the pair of radial detection coils is electrically connected to a radial signal line through which a radial combined signal obtained by combining the detection signals from the respective radial detection coils flows, and
the pair of thrust detection coils is electrically connected to a thrust signal line through which a thrust combined signal obtained by combining the detection signals from the respective thrust detection coils flows,
the motor bearing wear monitoring device comprising:
a threshold storage configured to store a radial threshold set to be smaller than a voltage value of the radial combined signal and a thrust threshold set to be smaller than a voltage value of the thrust combined signal;
an acquisition unit configured to acquire a radial line signal flowing through the radial signal line and a thrust line signal flowing through the thrust signal line; and
a disconnection detection unit configured to detect, for each of the detection coils, the radial signal line, and the thrust signal line, presence or absence of disconnection,
wherein, when none of the detection coils, the radial signal line, and the thrust signal line is disconnected,
the radial combined signal flows through the radial signal line as the radial line signal, and
the thrust combined signal flows through the thrust signal line as the thrust line signal, and
wherein the disconnection detection unit is configured to
detect, based on a voltage value of the radial line signal and the radial threshold, presence or absence of the disconnection of the radial detection coils and the radial signal line, and
detect, based on a voltage value of the thrust line signal and the thrust threshold, presence or absence of the disconnection of the thrust detection coils and the thrust signal line.

2. The motor bearing wear monitoring device according to claim 1, further comprising a voltage value storage configured to update and store a radial maximum voltage value being a maximum value among voltage values of the radial combined signal, and a thrust maximum voltage value being a maximum value among voltage values of the thrust combined signal, wherein
the radial threshold is set based on the radial maximum voltage value, and
the thrust threshold is set based on the thrust maximum voltage value.

3. The motor bearing wear monitoring device according to claim 2, wherein
the radial threshold is set based on signal levels of noise components included in the radial line signal, and
the thrust threshold is set based on signal levels of noise components included in the thrust line signal.

4. The motor bearing wear monitoring device according to claim 3, wherein
the radial threshold is smaller than the thrust threshold.

5. The motor bearing wear monitoring device according to any one of claims 1 to 4, further comprising a threshold setting unit configured to set each of the radial threshold and the thrust threshold.

6. The motor bearing wear monitoring device according to claim 1, wherein
the plurality of detection coils includes
a pair of first radial detection coils and a pair of second radial detection coils each functioning as the pair of radial detection coils, and
a pair of first thrust detection coils and a pair of second thrust detection coils each functioning as the pair of thrust detection coils,
the pair of first radial detection coils and the pair of first thrust detection coils are disposed at an end of the stator on the one side, and
the pair of second radial detection coils and the pair of second thrust detection coils are disposed at an end of the stator on the other side,
the radial signal line includes
a first line electrically connected to the pair of first radial detection coils and through which a first combined signal obtained by combining the detection signals from the respective first radial detection coils flows as the radial combined signal, and
a second line electrically connected to the pair of second radial detection coils and through which a second combined signal obtained by combining the detection signals from the respective second radial detection coils flows as the radial combined signal,
the thrust signal line includes
a third line electrically connected to the pair of first thrust detection coils and through which a third combined signal obtained by combining the detection signals from the respective first thrust detection coils flows as the thrust combined signal, and
a fourth line electrically connected to the pair of second thrust detection coils and through which a fourth combined signal obtained by combining the detection signals from the respective second thrust detection coils flows as the thrust combined signal,
the radial threshold includes
a first threshold set to be smaller than a voltage value of the first combined signal, and
a second threshold set to be smaller than a voltage value of the second combined signal,
the thrust threshold includes
a third threshold set to be smaller than a voltage value of the third combined signal, and
a fourth threshold set to be smaller than a voltage value of the fourth combined signal,
the acquisition unit is configured to acquire
a first signal flowing through the first line and a second signal flowing through the second line as the radial line signals, and
a third signal flowing through the third line and a fourth signal flowing through the fourth line as the thrust line signals,
when none of the detection coils, the first line, the second line, the third line, and the fourth line is disconnected,
the first combined signal flows through the first line as the first signal,
the second combined signal flows through the second line as the second signal,
the third combined signal flows through the third line as the third signal,
the fourth combined signal flows through the fourth line as the fourth signal,
the disconnection detection unit is configured to
detect presence or absence of the disconnection of the first radial detection coils and the first line based on a voltage value of the first signal and the first threshold,
detect presence or absence of the disconnection of the second radial detection coils and the second line based on a voltage value of the second signal and the second threshold,
detect presence or absence of the disconnection of the third thrust detection coils and the third line based on a voltage value of the third signal and the third threshold, and
detect presence or absence of the disconnection of the fourth thrust detection coils and the fourth line based on a voltage value of the fourth signal and the fourth threshold.

7. A motor bearing wear monitoring device that monitors a wear state of bearings supporting a rotary shaft of a rotor, based on a detection signal from each of a plurality of detection coils configured to detect changes in magnetic flux corresponding to mechanical positional changes of the rotor relative to a stator of a motor of a canned motor pump, wherein
the plurality of detection coils includes
a pair of radial detection coils configured to detect the changes in magnetic flux in a radial direction of the rotary shaft, and
a pair of thrust detection coils configured to detect the changes in magnetic flux in a thrust direction of the rotary shaft,
the pair of radial detection coils and the pair of thrust detection coils are disposed at an end of the stator on one side or the other side in the thrust direction,
the pair of radial detection coils is electrically connected to a radial signal line through which a radial combined signal obtained by combining the detection signals from the respective radial detection coils flows, and
the pair of thrust detection coils is electrically connected to a thrust signal line through which a thrust combined signal obtained by combining the detection signals from the respective thrust detection coils flows,
the motor bearing wear monitoring device comprising:
a voltage-value storage configured to update and store a radial maximum voltage value that is a maximum value among voltage values of the radial combined signal and a thrust maximum voltage value that is a maximum value among voltage values of the thrust combined signal;
an acquisition unit configured to acquire a radial line signal flowing through the radial signal line, a thrust line signal flowing through the thrust signal line, the radial maximum voltage value, and the thrust maximum voltage value;
a machine-learning-model storage that stores a radial machine learning model trained by machine learning to estimate presence or absence of disconnection of the radial detection coils and the radial signal line in response to input of a voltage value of the radial line signal and the radial maximum voltage value, and a thrust machine learning model trained by machine learning to estimate presence or absence of disconnection of the thrust detection coils and the thrust signal line in response to input of a voltage value of the thrust line signal and the thrust maximum voltage value; and
a disconnection estimation unit configured to estimate, for each of the detection coils, the radial signal line, and the thrust signal line, presence or absence of disconnection, wherein,
when none of the detection coils, the radial signal line, and the thrust signal line is disconnected,
the radial combined signal flows through the radial signal line as the radial line signal, and
the thrust combined signal flows through the thrust signal line as the thrust line signal, and
the disconnection estimation unit is configured to
estimate, for each of the radial detection coils and the radial signal line, presence or absence of disconnection by inputting the voltage value of the radial line signal and the radial maximum voltage value to the radial machine learning model, and
estimate, for each of the thrust detection coils and the thrust signal line, presence or absence of disconnection by inputting the voltage value of the thrust line signal and the thrust maximum voltage value to the thrust machine learning model.

8. A disconnection detection program that configures a computer to operate as the motor bearing wear monitoring device according to claim 1.

9. A disconnection detection program that configures a computer to operate as the motor bearing wear monitoring device according to claim 7.

10. A disconnection detection method performed by a motor bearing wear monitoring device that monitors a wear state of bearings supporting a rotary shaft of a rotor based on a detection signal from each of a plurality of detection coils configured to detect changes in magnetic flux corresponding to mechanical positional changes of the rotor relative to a stator of a motor of a canned motor pump, wherein
the plurality of detection coils includes
a pair of radial detection coils configured to detect the changes in magnetic flux in a radial direction of the rotary shaft, and
a pair of thrust detection coils configured to detect the changes in magnetic flux in a thrust direction of the rotary shaft,
the pair of radial detection coils and the pair of thrust detection coils are disposed at an end of the stator on one side or the other side in the thrust direction,
the pair of radial detection coils is electrically connected to a radial signal line through which a radial combined signal obtained by combining the detection signals from the respective radial detection coils flows,
the pair of thrust detection coils is electrically connected to a thrust signal line through which a thrust combined signal obtained by combining the detection signals from the respective thrust detection coils flows,
the motor bearing wear monitoring device includes a threshold storage configured to store a radial threshold set to be smaller than a voltage value of the radial combined signal and a thrust threshold set to be smaller than a voltage value of the thrust combined signal, and,
when none of the detection coils, the radial signal line, and the thrust signal line is disconnected,
the radial combined signal flows through the radial signal line as a radial line signal, and
the thrust combined signal flows through the thrust signal line as a thrust line signal,
the disconnection detection method comprising:
an acquisition step of acquiring, by the motor bearing wear monitoring device, the radial line signal from the radial signal line and acquiring, by the motor bearing wear monitoring device, the thrust line signal from the thrust signal line; and
a disconnection detection step of detecting, by the motor bearing wear monitoring device, the disconnection for each of the radial detection coils and the radial signal line based on a voltage value of the radial line signal and the radial threshold, and detecting, by the motor bearing wear monitoring device, the disconnection for each of the thrust detection coils and the thrust signal line based on a voltage value of the thrust line signal and the thrust threshold.
